# EUROPEAN PATENT APPLICATION

(11) **EP 4 572 066 A1**
(43) Date of publication of application: **18.06.2025**
(21) Application number: 24219091.6
(22) Date of filing: 11.12.2024
(51) Int. Cl.: H02J 3/32, B60L 53/66, H02J 7/00

(54) **A METHOD OF FORMING A CLUSTER OF VEHICLES TO FORM A MICROGRID**

(30) Priority: 12.12.2023 US 202318536805
(71) Applicant: Volvo Car Corporation, 405 31 Göteborg (SE)
(72) Inventor: ROPEL, Andreas Martin Viktor, 40531 Göteborg (SE); LE SAUX, Matthias, 40531 Göteborg (SE); LARSSON, Daniel, 40531 Göteborg (SE); SINGH, Aditya Pratap, 40531 Göteborg (SE)
(74) Representative: Maiwald GmbH

(57) **Abstract**

Systems/techniques that facilitate intelligent vehicular microgrids are provided. A system having a memory that stores computer executable components and a processor that executes the computer executable components stored in the memory. The computer executable components comprise a communication component that receives a message from one or more vehicles, wherein the message comprising an indication to discharge energy, a grid component that adds the one or more vehicles to form a cluster of vehicles that provided the indication to discharge electricity, and the communication component that broadcasts a request to join the cluster of vehicles upon formation the cluster.

## Description

### TECHNICAL FIELD

The subject disclosure relates generally to electric charging of vehicles, and more specifically to intelligent vehicular microgrids.

### BACKGROUND

Many modern vehicles implement fully or partially electric propulsion systems. If a vehicle has surplus or extra electricity that its electric propulsion system does not need, the vehicle can discharge that surplus or extra electricity to a main electric grid. Unfortunately, existing techniques do not permit such discharging to be effectively scaled up to a large number of vehicles.

Accordingly, systems or techniques that can address one or more of these technical problems can be desirable.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate intelligent vehicular microgrids are described.

According to one or more embodiments, a computer-implemented method, comprises: receiving, by a system comprising a processor, a message from one or more vehicles, wherein the message comprising an indication to discharge energy; adding, by the system, the one or more vehicles to form a cluster of vehicles that provided the indication to discharge energy; and broadcasting, by the system, request to join the cluster of vehicles upon formation the cluster.

According to another embodiment, a system, comprises: a memory that stores computer executable components; and a processor that executes the computer executable components stored in the memory, wherein the computer executable components comprise: a communication component that receives a message from one or more vehicles, wherein the message comprising an indication to discharge energy; a grid component that adds the one or more vehicles to form a cluster of vehicles that provided the indication to discharge electricity; and the communication component that broadcasts a request to join the cluster of vehicles upon formation the cluster.

According to yet another embodiment, A non-transitory machine-readable medium, comprising executable instructions that, when executed by a processor, facilitate performance of operations, comprising: receiving a message from one or more vehicles, wherein the message comprising an indication to discharge energy; adding the one or more vehicles to form a cluster of vehicles that provided the indication to discharge energy; and broadcasting request to join the cluster of vehicles upon formation the cluster.

According to one or more embodiments, the above-described system can be implemented as a computer-implemented method or a computer program product.

### DESCRIPTION OF THE DRAWINGS

FIGs. 1-3 illustrate example, non-limiting block diagrams showing how vehicles can interact with an intelligent vehicular microgrid in accordance with one or more embodiments described herein.
FIG. 4 illustrates a block diagram of an example, non-limiting system that facilitates control of an intelligent vehicular microgrid in accordance with one or more embodiments described herein.
FIG. 5 illustrates a block diagram of an example, non-limiting system including a grid-side discharge determination generated by a machine learning model that facilitates control of an intelligent vehicular microgrid in accordance with one or more embodiments described herein.
FIGs. 6-9 illustrate example, non-limiting block diagrams and flow diagrams showing how a machine learning model can generate a grid-side discharge determination in accordance with one or more embodiments described herein.
FIG. 10 illustrates a block diagram of an example, non-limiting system including a vehicle-side docking notification that facilitates control of an intelligent vehicular microgrid in accordance with one or more embodiments described herein.
FIG. 11 illustrates an example, non-limiting block diagram of a docking notification in accordance with one or more embodiments described herein.
FIG. 12 illustrates an example, non-limiting block diagram showing how vehicle-side discharge rewards can be generated in response to a vehicle-side docking notification in accordance with one or more embodiments described herein.
FIGs. 13-15 illustrate flow diagrams of an example, non-limiting computer-implemented method that facilitates vehicle-side operation of an intelligent vehicular microgrid in accordance with one or more embodiments described herein.
FIG. 16 illustrates an example, non-limiting block diagram of a training dataset that can be used to train machine learning models in accordance with one or more embodiments described herein.
FIG. 17 illustrates an example, non-limiting block diagram showing how machine learning models can be trained in accordance with one or more embodiments described herein.
FIG. 18A illustrates a flow diagram of an example, non-limiting computer-implemented method that facilitates control of an intelligent vehicular microgrid in accordance with one or more embodiments described herein.
FIG. 18B illustrates a flow diagram of an example, non-limiting computer-implemented method that facilitates control of an intelligent vehicular microgrid in accordance with one or more embodiments described herein.
FIG. 19 illustrates a block diagram of an example, non-limiting operating environment in which one or more embodiments described herein can be facilitated.
FIG. 20 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Many modern vehicles (e.g., cars, trucks, buses, motorcycles, watercraft, aircraft) implement fully or partially electric propulsion systems. For example, various vehicles are fully electric, such that they are propelled by electric motors rather than internal combustion engines. As another example, various other vehicles are hybrids, such that they are propelled by both electric motors and internal combustion engines working together simultaneously or alternately.

It can sometimes be possible for a vehicle with a fully or partially electric propulsion system to have surplus or extra electricity that its propulsion system does not currently need. In such case, the vehicle can discharge that surplus or extra electricity to a main electric grid. More specifically, the vehicle can be driven to a vehicular charging station coupled to the main electric grid, the vehicle can be plugged into the vehicular charging station (e.g., a charging cable of the vehicular charging station can be inserted into a charging port of the vehicle), and the vehicular charging station can accordingly route electricity from an onboard battery of the vehicle to the main electric grid. The purpose of such discharge of surplus electricity can be to recycle electricity that is unneeded or unwanted by the vehicle so as to assist or otherwise alleviate an operational load of the main electric grid.

Unfortunately, and as recognized by the inventors of various embodiments described herein, existing techniques do not permit such discharging to be effectively scaled up to a large number of vehicles. Indeed, the present inventors realized that, when existing techniques are implemented, any given vehicle discharges its surplus electricity to the main electric grid independently of or otherwise without regard to other vehicles that also plan to discharge. In other words, vehicles discharge their surplus electricity to the main electric grid on their own schedules in uncoordinated fashion. As the present inventors recognized, such lack of coordination can be problematic or otherwise suboptimal for the main electric grid. After all, such lack of coordination often causes the main electric grid to receive discharged electricity in negligible amounts or at inopportune times.

To clarify, consider a single vehicle that discharges its surplus electricity to the main electric grid. With today's vehicular battery capacities, the maximum amount of surplus electricity discharged by that single vehicle measures on the order of kilowatt-hours. In stark contrast, the main electric grid handles electricity amounts measuring on the order of gigawatt-hours or even terawatt-hours. Accordingly, the surplus electricity discharged by that single vehicle is so small that it cannot be considered as providing, by itself, any meaningful, consequential, or non-negligible assistance to the main electric grid. Furthermore, even if that single vehicle could provide meaningful, consequential, or non-negligible assistance to the main electric grid, such assistance would be provided according to the schedule of that single vehicle, rather than according to the schedule of the main electric grid. In other words, that single vehicle will discharge its surplus electricity at whatever time is convenient for that single vehicle, but whatever time is convenient for that single vehicle might not be a time at which the main electric grid warrants or needs assistance. For example, that single vehicle might discharge its surplus electricity at a time at which the main electric grid is experiencing low operational load (e.g., during nighttime hours). In such case, the main electric grid is receiving assistance from the vehicle at a moment when the main electric grid does not require assistance. Conversely, as another example, that single vehicle might refrain from discharging surplus electricity at a time at which the main electric grid is experiencing high operational load (e.g., during peak travel hours). In such case, the main electric grid is not receiving assistance from the vehicle at a moment when the main electric grid requires or would most benefit from assistance.

Accordingly, systems or techniques that can address one or more of these technical problems can be desirable.

Various embodiments described herein can address one or more of these technical problems. One or more embodiments described herein include systems, computer-implemented methods, apparatus, or computer program products that can facilitate intelligent vehicular microgrids. As described herein, an intelligent vehicular microgrid can comprise a plurality of vehicular charging stations and an intermediate battery, which can be coupled to each other and to a main electric grid. In various aspects, various vehicles can discharge, on their own schedules, surplus electricity at the plurality of vehicular charging stations. However, rather than directly routing such surplus electricity to the main electric grid, the plurality of vehicular charging stations can instead route such surplus electricity to the intermediate battery for storage. Thus, the intermediate battery can accrue surplus electricity over time. In various instances, as described herein, the intelligent vehicular microgrid can leverage artificial intelligence to determine or predict a time at which the main electric grid needs, requires, warrants, or otherwise would benefit from assistance or supplementation. At such time, the intelligent vehicular microgrid can discharge the surplus electricity that is accumulated in the intermediate battery to the main electric grid. In other words, the various vehicles can individually or independently discharge their surplus electricity, at whatever times are convenient for them, to the intermediate battery, and the intermediate battery can consolidate such surplus electricity and discharge it in bulk to the main electric grid at an appropriate, useful, or beneficial time. In this way, the intelligent vehicular microgrid can provide non-negligible assistance to the main electric grid at a time at which the main electric grid warrants such assistance.

More specifically, various embodiments described herein can be considered as a computerized tool (e.g., any suitable combination of computer-executable hardware or computer-executable software) that can control or otherwise govern the intelligent vehicular microgrid. In various aspects, the computerized tool can comprise a grid component and a vehicle component. In various instances, the grid component can govern, control, or otherwise facilitate how the intelligent vehicular microgrid interacts with the main electric grid. In contrast, the vehicle component can govern, control, or otherwise facilitate how the intelligent vehicular microgrid interacts with any vehicles that dock at the plurality of vehicular charging stations.

In various embodiments, the grid component of the computerized tool can electronically record, measure, or otherwise capture a current operational context of the intelligent vehicular microgrid.

In various aspects, the current operational context can include a current time or date. In various instances, the current time or date can be provided by any suitable electronic clock or electronic calendar that is accessible by the grid component.

In various cases, the current operational context can include a current operational load of the intermediate battery. In various aspects, the current operational load of the intermediate battery can indicate how much electricity is stored within the intermediate battery at the current time or date, can indicate a rate of electricity being routed to the intermediate battery (e.g., from vehicles docked at the plurality of vehicular charging stations) at the current time or date, or can indicate a rate of electricity being routed from the intermediate battery (e.g., to vehicles docked at the plurality of vehicular charging stations) at the current time or date. In various instances, the current operational load of the intermediate battery can be provided by any suitable voltage meters or amperage meters that are integrated with the intermediate battery or with the plurality of vehicular charging stations.

In various cases, the current operational context can include an operational load history of the intermediate battery. In various aspects, the operational load history of the intermediate battery can be timeseries data indicating how much electricity was stored in the intermediate battery, a rate of electricity being routed to the intermediate battery, or a rate of electricity being routed out of the intermediate battery at various past times or dates (e.g., at each hour over the previous week). In various instances, the operational load history of the intermediate battery can have been previously recorded by the voltage meters or amperage meters that are integrated with the intermediate battery or with the plurality of vehicular charging stations.

In various cases, the current operational context can include a current operational load of the main electric grid. In various aspects, the current operational load of the main electric grid can indicate how much electricity is available to be drawn from the main electric grid at the current time or date, can indicate a rate of electricity being routed to the main electric grid (e.g., from electricity-generating power plants) at the current time or date, or can indicate a rate of electricity being routed from the main electric grid (e.g., by whatever electricity-consuming equipment is powered by the main electric grid, such as commercial or residential buildings) at the current time or date. In various instances, the current operational load of the main electric grid can be provided by any suitable voltage meters or amperage meters that are integrated with the main electric grid.

In various cases, the current operational context can include an operational load history of the main electric grid. In various aspects, the operational load history of the main electric grid can be timeseries data indicating how much electricity was available within the main electric grid, a rate of electricity being routed to the main electric grid, or a rate of electricity being routed out of the main electric grid at various past times or dates (e.g., at each minute over the previous three days). In various instances, the operational load history of the main electric grid can have been previously recorded by the voltage meters or amperage meters that are integrated with the main electric grid.

In various cases, the current operational context can include a current weather forecast associated with the intelligent vehicular microgrid or with the main electric grid. In various aspects, the current weather forecast can be timeseries data indicating an outside temperature, an outside pressure, an outside precipitation level, or an outside wind speed that is measured at the current time or date for an environment of the main electric grid or of the intelligent vehicular microgrid, or that is predicted at future times or dates for the environment of the main electric grid or of the intelligent vehicular microgrid. In various instances, the current weather forecast can be provided to the grid component by any suitable computing device associated with a weather forecasting service.

These are mere non-limiting examples of the current operational context. In various cases, the current operational context can include any other suitable information pertaining to the intelligent microgrid or to the main electric grid (e.g., current events information that might be relevant regarding electricity generation or consumption).

In various embodiments, the grid component can electronically store, maintain, control, or otherwise access a first machine learning model. In various aspects, the first machine learning model can exhibit any suitable internal architecture, such as a deep learning neural network internal architecture. For example, the first machine learning model can include any suitable numbers of any suitable types of layers (e.g., input layer, one or more hidden layers, output layer, any of which can be convolutional layers, dense layers, non-linearity layers, pooling layers, batch normalization layers, or padding layers). As another example, the first machine learning model can include any suitable numbers of neurons in various layers (e.g., different layers can have the same or different numbers of neurons as each other). As yet another example, the first machine learning model can include any suitable activation functions (e.g., softmax, sigmoid, hyperbolic tangent, rectified linear unit) in various neurons (e.g., different neurons can have the same or different activation functions as each other). As still another example, the first machine learning model can include any suitable interneuron connections or interlayer connections (e.g., forward connections, skip connections, recurrent connections). However, these are mere non-limiting examples of the first machine learning model. In other cases, the first machine learning model can exhibit any other suitable internal architecture (e.g., support vector machine, naive Bayes, linear regression, logistic regression, decision tree, random forest).

In any case, the first machine learning model can be configured to receive, as input, the current operational context and to produce, as output, a discharge determination.

In various aspects, the discharge determination can comprise a binary classification label. In various instances, the binary classification label can binarily or dichotomously indicate whether or not the current time or date is appropriate (in the opinion of the first machine learning model) to discharge electricity from the intermediate battery to the main electric grid. If the binary classification label indicates that the current time or date is not appropriate, the grid component can refrain from discharging the intermediate battery to the main electric grid at the current time or date. On the other hand, if the binary classification label indicates that the current time or date is appropriate, the grid component can instead discharge the intermediate battery to the main electric grid at the current time or date. In some situations in which the binary classification label indicates that the current time or date is appropriate, the grid component can discharge an entirety of whatever electricity is stored within the intermediate battery to the main electric grid at the current time or date. However, in other situations in which the binary classification label indicates that the current time or date is appropriate, the grid component can instead discharge less than an entirety of whatever electricity is stored within the intermediate battery to the main electric grid at the current time or date. For instance, in various cases, the discharge determination can further comprise an electricity amount indicator, which can specify how much of the electricity stored within the intermediate battery is to be discharged to the main electric grid, and the grid component can accordingly abide by the electricity amount indicator.

In this way, the grid component can be considered as providing intelligent assistance to the main electric grid (e.g., as discharging to the main electric grid a non-negligible amount of supplemental electricity at a time at which the main electric grid would materially benefit from such supplemental electricity).

Although the herein disclosure has so far described various embodiments in which electricity is accumulated over time within the intermediate battery and intelligently discharged at an appropriate time to the main electric grid, these are mere non-limiting examples. Indeed, in various other embodiments, it can sometimes be appropriate to discharge electricity not from the intermediate battery to the main electric grid, but instead from the main electric grid to the intermediate battery. Accordingly, in various aspects, rather than comprising the binary classification label, the discharge determination can instead comprise a tertiary classification label. In various instances, the tertiary classification label can tertiarily or trichotomously indicate whether the current time or date is appropriate (in the opinion of the first machine learning model) to discharge electricity from the intermediate battery to the main electric grid, is appropriate to discharge electricity from the main electric grid to the intermediate battery, or is appropriate for neither. In some cases, the discharge determination can comprise the electricity amount indicator, which can specify how much electricity is to be discharged from, or charged to, the intermediate battery. If the tertiary classification label indicates that the current time or date is appropriate for discharging from the intermediate battery to the main electric grid, then the grid component can discharge, at the current time or date and from the intermediate battery to the main electric grid, however much electricity is specified by the electricity amount indicator. If the tertiary classification label instead indicates that the current time or date is appropriate for discharging from the main electric grid to the intermediate battery, then the grid component can discharge, at the current time or date and from the main electric grid to the intermediate battery, however much electricity is specified by the electricity amount indicator. If the tertiary classification label instead indicates that the current time or date is appropriate for neither discharging from nor charging to the intermediate battery, then the grid component can perform neither at the current time or date.

In this way, the grid component can be considered as providing intelligent assistance from the intermediate battery to the main electric grid, or from the main electric grid to the intermediate battery.

In various embodiments, when any given vehicle docks at (e.g., plugs into) any given one of the plurality of vehicular charging stations, the vehicle component of the computerized tool can electronically receive a docking notification from that given vehicle. In various aspects, the docking notification can be any suitable electronic message that indicates or specifies whether the vehicle plans or desires to charge its onboard battery at the given vehicular charging station or instead plans or desires to discharge surplus electricity at the given vehicular charging station.

In some aspects, the docking notification can indicate that the given vehicle plans or desires to discharge surplus electricity at the given vehicular charging station. In such case, the docking notification can further indicate an amount of electricity that the given vehicle has allocated for discharging. In various instances, the given vehicle can have a choice to discharge that allocated electricity amount to the main electric grid or instead to the intermediate battery of the intelligent vehicular microgrid. In various cases, the vehicle component can incentivize discharging to one over the other, depending upon the current operational context of the intelligent vehicular microgrid. In various instances, the vehicle component can facilitate such incentivization via artificial intelligence.

In particular, the vehicle component can electronically store, maintain, control, or otherwise access a second machine learning model. In various aspects, the second machine learning model can exhibit any suitable internal architecture, such as a deep learning neural network internal architecture. For example, the second machine learning model can include any suitable numbers of any suitable types of layers (e.g., input layer, one or more hidden layers, output layer, any of which can be convolutional layers, dense layers, non-linearity layers, pooling layers, batch normalization layers, or padding layers). As another example, the second machine learning model can include any suitable numbers of neurons in various layers (e.g., different layers can have the same or different numbers of neurons as each other). As yet another example, the second machine learning model can include any suitable activation functions (e.g., softmax, sigmoid, hyperbolic tangent, rectified linear unit) in various neurons (e.g., different neurons can have the same or different activation functions as each other). As still another example, the second machine learning model can include any suitable interneuron connections or interlayer connections (e.g., forward connections, skip connections, recurrent connections). However, these are mere non-limiting examples of the second machine learning model. In other cases, the second machine learning model can exhibit any other suitable internal architecture (e.g., support vector machine, naive Bayes, linear regression, logistic regression, decision tree, random forest).

In any case, the second machine learning model can be configured to receive, as input, both the current operational context and the allocated electricity amount indicated in the docking notification, and the second machine learning model can be configured to determine, as output, discharge rewards. In various aspects, the discharge rewards can comprise a main grid reward and a battery reward. In various instances, the main grid reward can be any suitable electronic data that indicates or specifies a reward (e.g., a monetary amount, a discount percentage, a number of reward points) that is payable to the given vehicle in response to the given vehicle discharging its surplus electricity to the main electric grid. Conversely, the battery reward can be any suitable electronic data that indicates or specifies a reward that is payable to the given vehicle in response to the given vehicle instead discharging its surplus electricity to the intermediate battery. If the allocated electricity amount is small, or if the main electric grid is not presently or currently in need of assistance, the main grid reward can be lower and the battery reward can be higher. In contrast, if the allocated electricity amount is large, or if the main electric grid is presently or currently in need of assistance, the main grid reward can be higher and the battery reward can be lower.

In various aspects, the vehicle component can electronically inform the given vehicle of the discharge rewards and can electronically prompt the given vehicle to select between discharging to the main electric grid or instead discharging to the intermediate battery. In various instances, the given vehicle can make a selection, and the vehicle component can cause the given vehicular charging station to discharge the allocated electricity amount from the given vehicle in accordance with that selection. In this way, the vehicle component can be considered as intelligently incentivizing where the given vehicle chooses to discharge its surplus electricity.

In various cases, if the given vehicle chooses to discharge its surplus electricity to the intermediate battery, the vehicle component can determine whether or not the given vehicle has done so previously. If the given vehicle has not done so previously, the vehicle component can assign to the given vehicle a microgrid membership identifier. In various aspects, the microgrid membership identifier can be any suitable alphanumeric string and can be considered as indicating that the given vehicle is now a member of the intelligent vehicular microgrid (e.g., as indicating that the given vehicle has contributed surplus electricity at least once to the intermediate battery).

In some aspects, rather than indicating a plan or desire to discharge surplus electricity at the given vehicular charging station, the docking notification can instead indicate that the given vehicle plans or desires to charge its onboard battery at the given vehicular charging station. In such case, the vehicle component can parse the docking notification in search of a valid microgrid membership identifier. If the vehicle component locates a valid microgrid membership identifier in the docking notification, the vehicle component can conclude that the given vehicle has permission to charge from the intermediate battery. In such case, the vehicle component can cause the given vehicular charging station to charge the onboard battery of the given vehicle via the intermediate battery (e.g., up to whatever total amount of electricity the given vehicle previously discharged into the intermediate battery). On the other hand, if the vehicle component does not locate a valid microgrid membership identifier in the docking notification (e.g., no identifier is present at all, or an invalid identifier is present), the vehicle component can conclude that the given vehicle does not have permission to charge from the intermediate battery. In such case, the vehicle component can cause the given vehicular charging station to charge the onboard battery of the given vehicle via the main electric grid.

To help cause the discharge determination and the discharge rewards to be accurate, the first and second machine learning models can, as described herein, undergo any suitable type or paradigm of training (e.g., supervised training, unsupervised training, reinforcement learning).

Various embodiments described herein can be employed to use hardware or software to solve problems that are highly technical in nature (e.g., to facilitate intelligent vehicular microgrids), that are not abstract and that cannot be performed as a set of mental acts by a human. Further, some of the processes performed can be performed by a specialized computer (e.g., a deep learning neural network having internal parameters such as convolutional kernels) for carrying out defined tasks related to intelligent vehicular microgrids.

For example, such defined tasks can include: accumulating, by a device operatively coupled to a processor and within an intermediate battery coupled to a set of vehicular charging stations, surplus electricity collectively supplied by one or more vehicles that dock at the set of vehicular charging stations; and discharging, by the device and at a time at which a main electric grid warrants supplementation, the surplus electricity from the intermediate battery to the main electric grid. In various instances, the device can determine the time at which the main electric grid warrants supplementation, via execution of a machine learning model. In various cases, the machine learning model can classify a current time as either being or not being the time at which the main electric grid warrants supplementation, based on a current or historical operational load of the intermediate battery, a current or historical operational load of the main electric grid, or a current weather forecast associated with the main electric grid.

Such defined tasks are not performed manually by humans. Indeed, neither the human mind nor a human with pen and paper can electronically accrue in a battery surplus electricity supplied from vehicles and electronically discharge that accrued electricity to a main electric grid at a time determined via artificial intelligence. Indeed, vehicles, charging stations, machine learning models (e.g., deep learning neural networks), and batteries are inherently-computerized, hardware-based devices that simply cannot be implemented in any way by the human mind without computers. Accordingly, a computerized tool that can aggregate surplus electricity from multiple vehicles in a central battery and discharge that aggregated electricity to the main electricity grid at an appropriate time determined via machine learning is likewise inherently-computerized and hardware-based and cannot be implemented in any sensible, practical, or reasonable way without computers.

Moreover, various embodiments described herein can integrate into a practical application various teachings relating to intelligent vehicular microgrids. As explained above, the present inventors recognized that, when existing techniques are implemented, individual vehicles independently, separately, or otherwise in a disorganized, uncoordinated fashion discharge their surplus electricity to a main electric grid. As the present inventors realized, such disorganization or lack of coordination often causes the main electric grid to receive mere negligible amounts of electricity from such vehicles at inopportune or non-beneficial times. Indeed, the maximum amount of surplus electricity that any one vehicle can discharge to the main electric grid can be millions or even billions of times smaller than the total amount of electricity that the main electric grid handles (unless that one vehicle is massive, like a cruise ship). Furthermore, any one vehicle discharges its surplus electricity to the main electric grid at a time that is convenient for that one vehicle. However, such time often is not convenient for the main electric grid (e.g., discharging surplus electricity to the main electric grid at a time when the main electric grid is not in need of surplus electricity is unhelpful; likewise, refraining from discharging surplus electricity to the main electric grid at a time when the main electric grid needs surplus electricity is also unhelpful).

Various embodiments described herein can address or ameliorate various of these technical problems. Specifically, various embodiments described herein can include an intelligent vehicular microgrid that can comprise an intermediate battery and multiple vehicular charging stations. In various aspects, the multiple vehicular charging stations can accumulate, within the intermediate battery, whatever surplus electricity is provided at whatever times by whatever vehicles dock at the multiple vehicular charging stations. Because very many (e.g., hundreds of, thousands of, tens of thousands of) vehicles can discharge their surplus electricity at the multiple vehicular charging stations over time, the intermediate battery can be considered as eventually accruing or otherwise building up a non-negligible amount of surplus electricity. In various instances, the intelligent vehicular microgrid can identify, via machine learning, a time or date at which the main electric grid warrants assistance or supplementation (e.g., a time or date at which the intermediate battery possesses a non-negligible amount of electricity and at which the main electric grid is experiencing a high demand or need for electricity). At such time or date, the intelligent vehicular microgrid can discharge all (or a portion) of the accumulated electricity in the intermediate battery to the main electric grid. In this way, the intelligent vehicular microgrid can be considered as consolidating the surplus electricity provided at unorganized or unscheduled times by various vehicles and routing that consolidated electricity to the main electric grid at an opportune moment. Accordingly, various embodiments described herein can help to ameliorate various disadvantages suffered by existing techniques. Thus, various embodiments described herein certainly constitute a concrete and tangible technical improvement in the field of electric charging of vehicles. Therefore, various embodiments described herein clearly qualify as useful and practical applications of computers.

Furthermore, various embodiments described herein can control real-world tangible devices based on the disclosed teachings. For example, various embodiments described herein can electronically control (e.g., charge, discharge) real-world vehicular charging stations and real-world batteries.

It should be appreciated that the herein figures and description provide non-limiting examples of various embodiments and are not necessarily drawn to scale.

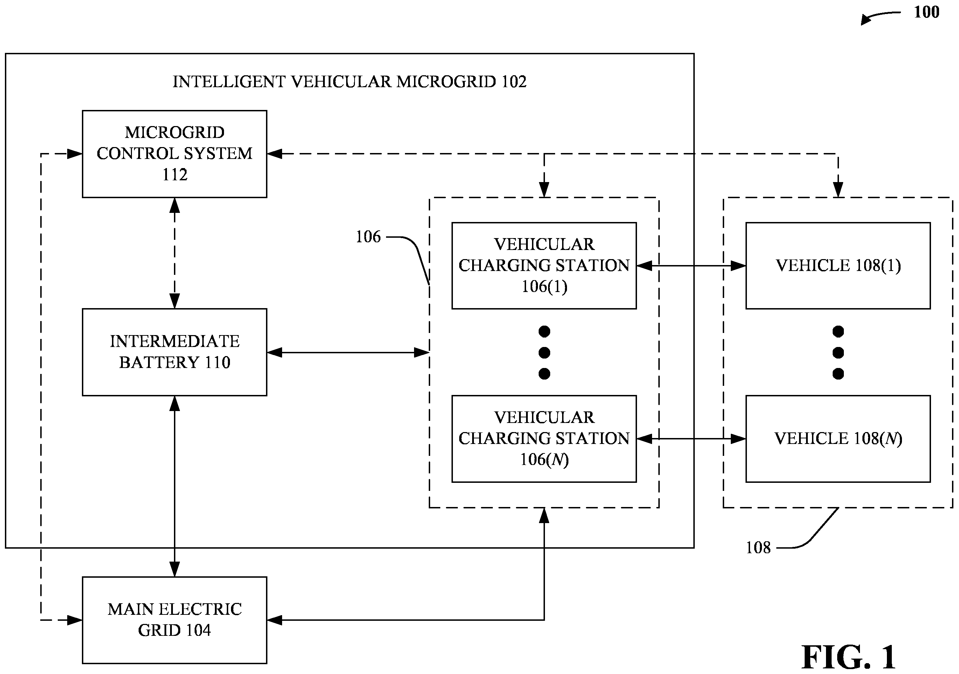

FIGs. 1-3 illustrate example, non-limiting block diagrams 100, 200, and 300 of an intelligent vehicular microgrid 102 in accordance with one or more embodiments described herein.

First, consider FIG. 1. As shown, the intelligent vehicular microgrid 102 can be coupled to a main electric grid 104. In various aspects, the main electric grid 104 can be any suitable electricity network that can facilitate large-scale generation, transmission, or distribution of electric power. In various instances, the main electric grid 104 can comprise any suitable number of any suitable types of electricity generation power plants. As some non-limiting examples, the main electric grid 104 can comprise any suitable number of coal power plants, any suitable number of solar power plants, any suitable number of wind power plants, any suitable number of hydroelectric power plants, any suitable number of geothermal power plants, any suitable number of nuclear power plants, or any suitable combinations thereof. In various cases, the main electric grid 104 can comprise any suitable number of any suitable types of electricity transmission devices. As some non-limiting examples, the main electric grid 104 can comprise any suitable number of step-up transformers (e.g., which can step-up the voltage of electricity that is produced by the electricity generation power plants) or any suitable number of high-voltage transmission lines (e.g., which can transmit electricity from a step-up transformer across long distances with little lost energy). In various aspects, the main electric grid 104 can comprise any suitable number of any suitable types of electricity distribution devices. As some non-limiting examples, the main electric grid 104 can comprise any suitable number of step-down transformers (e.g., which can step-down the voltage of electricity received from a high-voltage transmission line to a lower, customer-usable level), any suitable number of low-voltage distribution lines (e.g., which can transmit electricity from a step-down transformer across short distances), or any suitable number of electrical outlets or access points (e.g., which can receive electricity from a low-voltage distribution line for use by a customer).

Although FIG. 1 illustrates a single instance of the main electric grid 104, this is a mere non-limiting example for ease of explanation and illustration. In various cases, the intelligent vehicular microgrid 102 can be coupled to multiple main electric grids.

In various aspects, the intelligent vehicular microgrid 102 can comprise a set of vehicular charging stations 106. In various instances, the set of vehicular charging stations 106 can comprise *n* stations for any suitable positive integer *n:* a vehicular charging station 106(1) to a vehicular charging station 106(n). In various cases, each of the set of vehicular charging stations 106 can be coupled to the main electric grid 104. Accordingly, each of the set of vehicular charging stations 106 can be able to route electricity from the main electric grid 104 or can be able to route electricity to the main electric grid 104. In various aspects, each of the set of vehicular charging stations 106 can be any suitable station, stall, kiosk, or booth at which a vehicle having a fully or partially electric propulsion system can charge or discharge its onboard battery. In other words, each of the set of vehicular charging stations 106 can be considered as an outlet or access point by which vehicles can receive electricity from or discharge electricity to the main electric grid 104.

In various instances, a set of vehicles 108 can dock, at any suitable times or dates, at the set of vehicular charging stations 106. For ease of illustration and explanation, the set of vehicles 108 can respectively correspond (e.g., in one-to-one fashion) to the set of vehicular charging stations 106. Accordingly, since the set of vehicular charging stations 106 comprises n stations, the set of vehicles 108 can comprise n vehicles: a vehicle 108(1) that can dock at the vehicular charging station 106(1), to a vehicle 108(n) that can dock at the vehicular charging station 106(n). However, this is a mere non-limiting example for ease of illustration and explanation. In various other cases, the set of vehicles 108 can comprise more than n vehicles or fewer than n vehicles. Indeed, in practice, it is likely that the set of vehicles 108 will comprise far more than n vehicles (e.g., many orders of magnitude more). In any case, each of the set of vehicles 108 can be a vehicle having a fully or partially electric propulsion system and an onboard battery. Accordingly, each of the set of vehicles 108 can dock, at whatever time is convenient for that vehicle, at any of the set of vehicular charging stations 106, so as to charge or discharge its onboard battery.

In various aspects, the intelligent vehicular microgrid 102 can comprise an intermediate battery 110. In various instances, the intermediate battery 110 can be any suitable type of battery that can store, maintain, or otherwise hold electricity over a long period of time. As some non-limiting examples, the intermediate battery 110 can be any suitable type of chemical battery comprising any suitable number of battery cells, or the intermediate battery 110 can be any suitable type of solid-state battery comprising any suitable composition. In various cases, as shown, the intermediate battery 110 can be coupled to each of the set of vehicular charging stations 106. Accordingly, each of the set of vehicular charging stations 106 can route electricity to the intermediate battery 110 or can route electricity from the intermediate battery 110. In various aspects, as also shown, the intermediate battery 110 can be coupled to the main electric grid 104. Thus, electricity can be routed from the intermediate battery 110 to the main electric grid 104, or electricity can be routed from the main electric grid 104 to the intermediate battery 110.

Although FIG. 1 illustrates a single instance of the intermediate battery 110, this is a mere non-limiting example for ease of explanation and illustration. In various cases, the intelligent vehicular microgrid 102 can comprise multiple intermediate batteries.

In various cases, the set of vehicular charging stations 106 and the intermediate battery 110 can be physically positioned or situated in any location that is suitable for vehicular charging or vehicular discharging. As a non-limiting example, the set of vehicular charging stations 106 and the intermediate battery 110 can be physically located in, on, or at any suitable parking lot or parking garage (e.g., an airport parking lot or parking garage, a vehicular dealership parking lot or parking garage, a store parking lot or parking garage).

In various instances, the intelligent vehicular microgrid 102 can comprise a microgrid control system 112. In various cases, the microgrid control system 112 can be any suitable computer-executable hardware or computer-executable software that can govern or otherwise control the intelligent vehicular microgrid 102. That is, the microgrid control system 112 can controllably cause any of the set of vehicular charging stations 106 to transmit electricity to, or to draw electricity from, the main electric grid 104. Likewise, the microgrid control system 112 can controllably cause any of the set of vehicular charging stations 106 to transmit electricity to, or to draw electricity from, the intermediate battery 110. Similarly, the microgrid control system 112 can controllably cause the intermediate battery 110 to transmit electricity to, or to draw electricity from, the main electric grid 104.

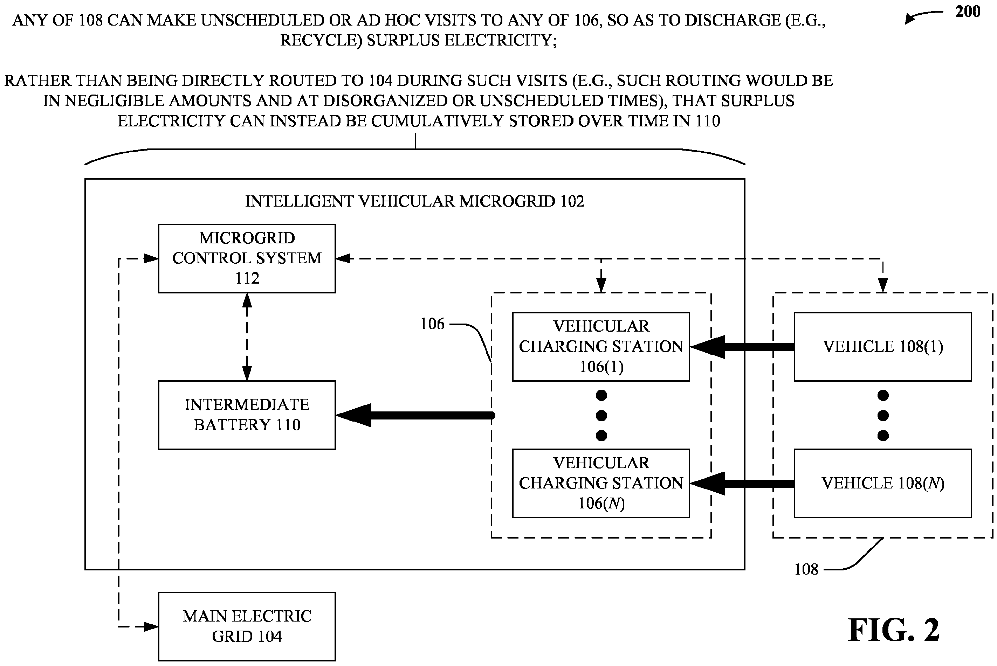

Now, consider FIG. 2. In various embodiments, any of the set of vehicles 108 can make an unscheduled or *ad hoc* visit to any of the set of vehicular charging stations 106, for the purpose of discharging surplus electricity. If such surplus electricity were directly routed to the main electric grid 104 during such unscheduled or *ad hoc* visits, the main electric grid 104 would be considered as receiving negligible amounts of electricity at random, unpredictable times (e.g., the surplus electricity from any one vehicle can be considered so small as to be negligible from the perspective of the main electric grid 104; the times at which any one vehicle discharges electricity are not based on the needs of the main electric grid 104). This could be considered as unhelpful to the main electric grid 104. To address this, in various aspects, the microgrid control system 112 can prevent or prohibit such surplus electricity from being directly routed to the main electric grid 104 during such unscheduled or *ad hoc* visits. Instead, the microgrid control system 112 can cause such surplus electricity to be routed to the intermediate battery 110 during such unscheduled or *ad hoc* visits. Thus, whatever surplus electricity that is discharged at whatever times by the set of vehicles 108 can be cumulatively stored within the intermediate battery 110 over time.

As a non-limiting example, the vehicle 108(1) can dock, at whatever time is convenient for the vehicle 108(1), at the vehicular charging station 106(1) and can discharge surplus electricity to the intermediate battery 110. That is, the vehicle 108(1) can park adjacent to or otherwise physically near the vehicular charging station 106(1), a charging cable of the vehicular charging station 106(1) can be inserted into a charging port of the vehicle 108(1), and the vehicular charging station 106(1) can, at the instruction of the microgrid control system 112, cause surplus electricity stored within the onboard battery of the vehicle 108(1) to be transmitted to the intermediate battery 110. Note that the time at which such discharge occurs is dictated by the vehicle 108(1) or its owner and has nothing at all to do with the needs of the main electric grid 104 (e.g., the vehicle 108(1) might discharge surplus electricity at a time when the main electric grid 104 is bearing a heavy operational load; or the vehicle 108(1) might discharge surplus electricity at a time when the main electric grid 104 is bearing a light operational load).

As another non-limiting example, the vehicle 108(n) can dock, at whatever time is convenient for the vehicle 108(n), at the vehicular charging station 106(n) and can discharge surplus electricity to the intermediate battery 110. That is, the vehicle 108(n) can park adjacent to or otherwise physically near the vehicular charging station 106(n), a charging cable of the vehicular charging station 106(n) can be inserted into a charging port of the vehicle 108(n), and the vehicular charging station 106(n) can, at the instruction of the microgrid control system 112, cause surplus electricity stored within the onboard battery of the vehicle 108(n) to be transmitted to the intermediate battery 110. Again, note that the time at which such discharge occurs is dictated by the vehicle 108(n) or its owner and has nothing at all to do with the needs of the main electric grid 104 (e.g., the vehicle 108(n) might discharge surplus electricity at a time when the main electric grid 104 is bearing a heavy operational load; or the vehicle 108(n) might discharge surplus electricity at a time when the main electric grid 104 is bearing a light operational load).

Note that some of the set of vehicles 108 can dock at the set of vehicular charging stations 106 at the same time as each other (e.g., the vehicle 108(1) can dock at the vehicular charging station 106(1) at the same time that the vehicle 108(n) docks at the vehicular charging station 106(n)). Note that others of the set of vehicles 108 can dock at the set of vehicular charging stations 106 at different times than each other (e.g., the vehicle 108(1) can dock at the vehicular charging station 106(1) at a different time than the vehicle 108(n) docks at the vehicular charging station 106(n)). Indeed, because there can be many more of the set of vehicles 108 than the set of vehicular charging stations 106, it can be the case in practice that many of the set of vehicles 108 dock at the set of vehicular charging stations 106 at very different times from each other (e.g., some vehicles can dock in the morning; some vehicles can dock in the afternoon; some vehicles can dock in the evening; some vehicles can dock daily; some vehicles can dock weekly; some vehicles can dock monthly; some vehicles can dock in *ad hoc* fashion with no repeating regularity).

In any case, the microgrid control system 112 can cause whatever surplus electricity is discharged at whatever unscheduled times by the set of vehicles 108 to be aggregated within the intermediate battery 110.

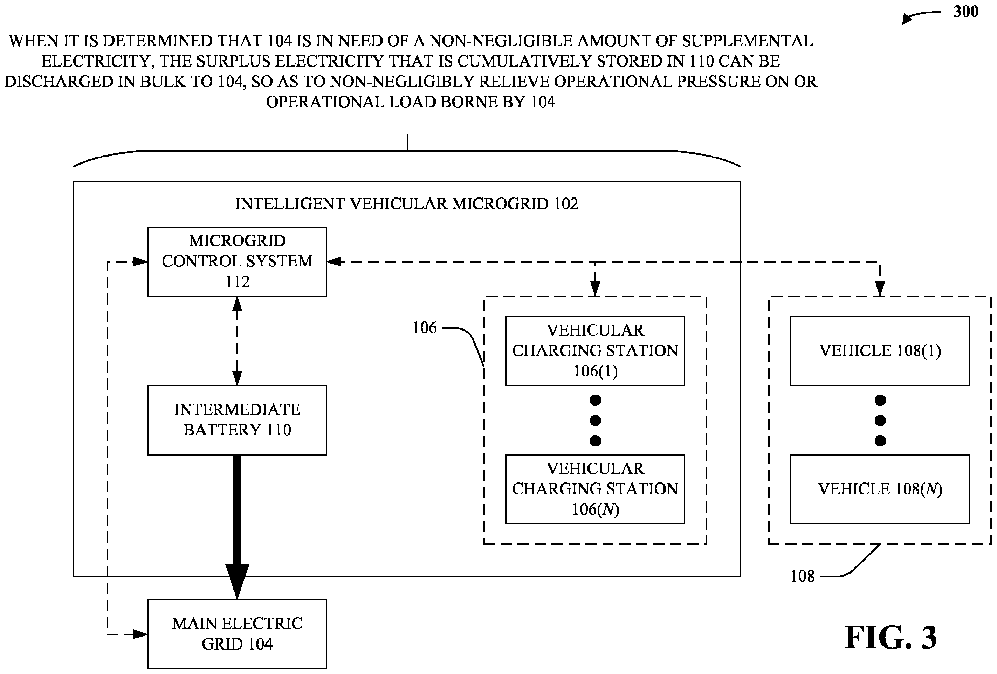

Now, consider FIG. 3. In various embodiments, the microgrid control system 112 can determine, via artificial intelligence, when the main electric grid 104 is in need of, or would otherwise materially benefit from, a non-negligible amount of supplemental electricity. In other words, the microgrid control system 112 can determine a time or date at which the main electric grid 104 is experiencing a particularly heavy operational load. At such time or date, the microgrid control system 112 can cause the surplus electricity that is accumulated within the intermediate battery 110 to be discharged in bulk to the main electric grid 104. Such bulk discharge of the surplus electricity can be considered as non-negligibly relieving the particularly heavy operational load being experienced by the main electric grid 104. Accordingly, the intermediate battery 110 can be considered as serving as an intermediary (hence the term "intermediate") storage point for the surplus electricity that is discharged at uncoordinated times by the set of vehicles 108. Rather than directly routing negligible amounts of surplus electricity at random or unscheduled times to the main electric grid 104, the intelligent vehicular microgrid 102 can be considered as consolidating or accumulating such surplus electricity together and discharging it together to the main electric grid 104 at a time that would benefit the main electric grid 104.

In this way, the intelligent vehicular microgrid 102 can be considered as providing intelligent, properly-timed assistance to the main electric grid 104. In other words, the intelligent vehicular microgrid 102 can be considered as intelligently coordinating the surplus electricity that is randomly discharged by the set of vehicles 108.

Note that, although the herein disclosure mainly describes the set of vehicles 108 as discharging surplus electricity to the intermediate battery 110, this is a mere non-limiting example. In other embodiments, any of the set of vehicles 108 can instead discharge electricity directly to the main electric grid 104 (e.g., the microgrid control system 112 might determine that the main electric grid 104 is in such dire need of assistance that direct discharge to the main electric grid 104 is warranted or recommended). In yet other embodiments, rather than discharging surplus electricity, any of the set of vehicles 108 can instead charge its onboard battery from the main electric grid 104 or from the intermediate battery 110, as described herein (e.g., it might be the case that not every vehicle has surplus electricity to discharge). Accordingly, it is to be understood that various of the set of vehicles 108 can discharge electricity (e.g., to the intermediate battery 110 or to the main electric grid 104), whereas others of the set of vehicles 108 can instead charge their onboard batteries (e.g., from the intermediate battery 110 or from the main electric grid 104). Similarly, although the herein disclosure main describes the intermediate battery 110 as discharging the surplus electricity it has accumulated to the main electric grid 104, this is a mere non-limiting example. In other embodiments, rather than discharging electricity to the main electric grid 104, the intermediate battery 110 can instead receive electricity from the main electric grid 104 (e.g., the microgrid control system 112 might determine that the main electric grid 104 is not in need of surplus electricity; instead, the microgrid control system 112 can determine that the main electric grid 104 itself has surplus electricity that can be stored within the intermediate battery 110).

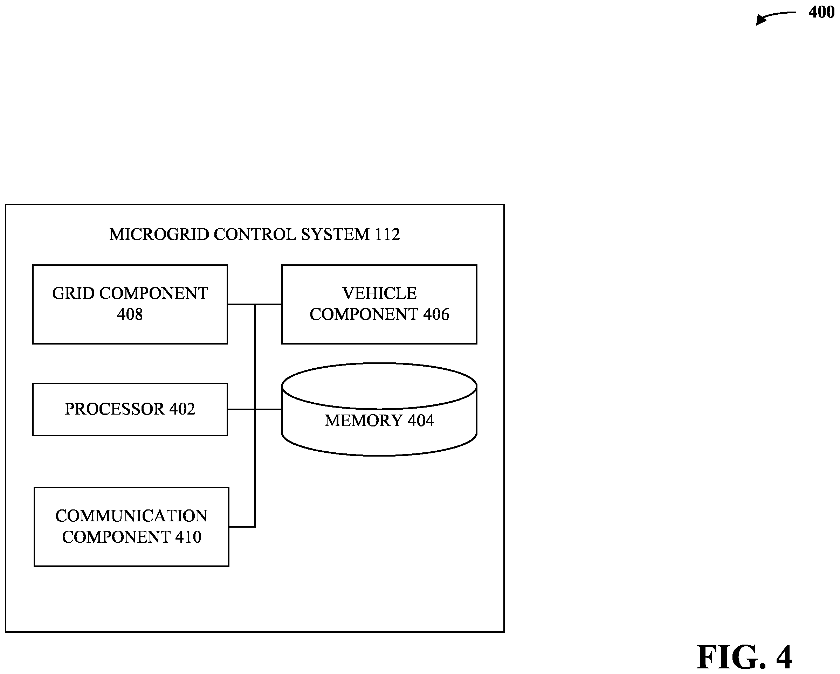

FIG. 4 illustrates a block diagram 400 of an example, non-limiting system that can facilitate control of the intelligent vehicular microgrid 102 in accordance with one or more embodiments described herein. In other words, FIG. 4 shows an example, non-limiting embodiment of the microgrid control system 112.

In various embodiments, the microgrid control system 112 can comprise a processor 402 (e.g., computer processing unit, microprocessor) and a non-transitory computer-readable memory 404 that is operably or operatively or communicatively connected or coupled to the processor 402. The non-transitory computer-readable memory 404 can store computer-executable instructions which, upon execution by the processor 402, can cause the processor 402 or other components of the microgrid control system 112 (e.g., vehicle component 406, grid component 408) to perform one or more acts. In various embodiments, the non-transitory computer-readable memory 404 can store computer-executable components (e.g., vehicle component 406, grid component 408), and the processor 402 can execute the computer-executable components. A communications component 410 can facilitate transmitting and receiving information.

In various embodiments, the microgrid control system 112 can comprise a grid component 408. In various aspects, as described herein, the grid component 408 can control or otherwise govern how the intelligent vehicular microgrid 102 interacts with the main electric grid 104. More specifically, the grid component 408 can determine when is an appropriate time to discharge whatever surplus electricity is accumulated in the intermediate battery 110 to the main electric grid 104, and the grid component 408 can facilitate such discharging at that appropriate time. In other cases, the grid component 408 can determine when is an appropriate time to charge electricity from the main electric grid 104 to the intermediate battery 110, and the grid component 408 can facilitate such charging at that appropriate time.

In various embodiments, the microgrid control system 112 can comprise a vehicle component 406. In various instances, as described herein, the vehicle component 406 can control or otherwise govern how the intelligent vehicular microgrid 102 interacts with the set of vehicles 108. More specifically, for any given vehicle that docks at any of the set of vehicular charging stations 106, the vehicle component 406 can determine whether the vehicle plans to discharge surplus electricity or instead to charge its onboard battery. If the vehicle plans to discharge surplus electricity, the vehicle component can generate, via artificial intelligence, discharge rewards that incentivize discharging to the intermediate battery 110 or that instead incentivize discharging directly to the main electric grid 104. If the vehicle instead plans to charge its onboard battery, the vehicle component can determine whether such charging should be performed via the intermediate battery 110 or instead via the main electric grid 104.

In embodiments, the 112 system can utilize the communication component 410 to receives a message from one or more vehicles, wherein the message comprising an indication to discharge energy. The grid component 408 can add the one or more vehicles to form a cluster of vehicles that provided the indication to discharge electricity; and the communication component 410 can broadcast a request to join the cluster of vehicles upon formation the cluster. The vehicle component 406 can accumulate electricity supplied by one or more vehicles connected to the charging station and storing the electricity into an intermediate battery. The communication component 410 can receive an indication that the intermediate battery is full. Additionally, the communication component 410 can establish communication with grid in response to receiving an indication that the intermediate battery is full. The grid component 408 can transmit electricity to the grid in response to receiving an indication that the intermediate battery is full.

The vehicle component 406 can extract payment information from one or more vehicles connected to the charging station and transmit payment using the payment information to all cars that joined the cluster. The message comprisse vehicle information, amount of electricity for discharging, payment information, health of the battery, amount of time available to discharge. The request can comprise a charging station identification, a charging station location, a payment offer information.

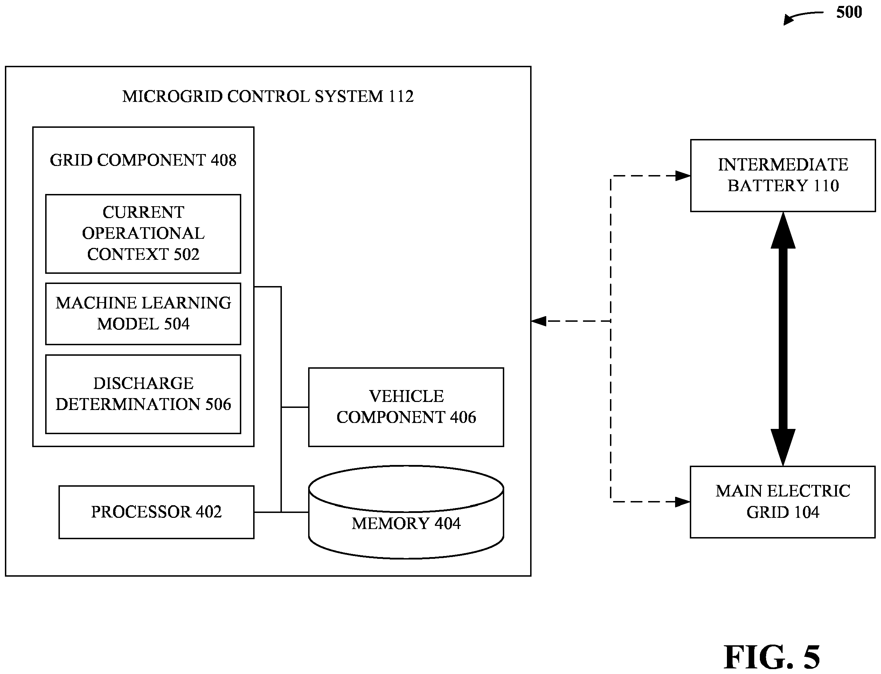

FIG. 5 illustrates a block diagram 500 of an example, non-limiting system including a grid-side discharge determination generated by a machine learning model that can facilitate control of an intelligent vehicular microgrid in accordance with one or more embodiments described herein.

In various embodiments, the grid component 408 can electronically access a current operational context 502 of the intelligent vehicular microgrid 102. In various aspects, the current operational context 502 can be any suitable electronic data that indicates a present-time status or operation of, or that otherwise pertains to, the intermediate battery 110 or the main electric grid 104.

In various embodiments, the grid component 408 can electronically store, electronically maintain, electronically control, or otherwise electronically access a machine learning model 504. In various aspects, the machine learning model 504 can have or otherwise exhibit any suitable internal architecture. As a non-limiting example, the machine learning model 504 can have or otherwise exhibit a deep learning internal architecture. For instance, the machine learning model 504 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers. However, these are mere non-limiting examples. In other aspects, the machine learning model 504 can instead have any other suitable internal architecture, such as a support vector machine architecture, a naive Bayes architecture, or a random forest architecture.

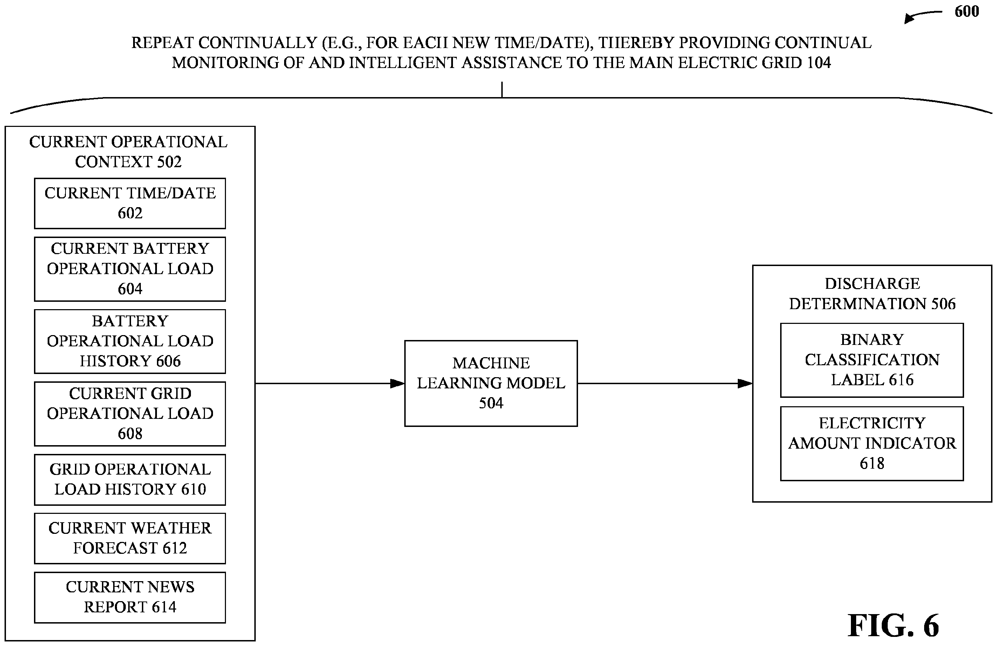

In various aspects, the grid component 408 can electronically execute the machine learning model 504 on the current operational context 502. In various instances, such execution can cause the machine learning model 504 to produce a discharge determination 506. In various cases, the discharge determination 506 can be any suitable electronic data that indicates whether a current time or date is appropriate for discharging the intermediate battery 110 to the main electric grid 104. Non-limiting aspects are described with respect to FIGs. 6-9.

FIGs. 6-9 illustrate example, non-limiting block diagrams 600 and 800 and flow diagrams 700 and 900 showing how the machine learning model 504 can generate the discharge determination 506 in accordance with one or more embodiments described herein.

First, consider FIG. 6. In various embodiments, as shown, the current operational context 502 can comprise a current time/date 602. In various aspects, the current time/date 602 can be specified at any suitable level of granularity. As a non-limiting example, the current time/date 602 can be specified in terms of current or present year, current or present month, current or present week, current or present day, current or present hour, current or present minute, current or present second, current or present fraction of a second, or any suitable combination thereof. In various instances, the current time/date 602 can be read or otherwise measured by any suitable electronic clock, electronic calendar, or electronic timer of the microgrid control system 112.

In various aspects, as shown, the current operational context 502 can comprise a current battery operational load 604. In various instances, the current battery operational load 604 can be one or more scalars, one or more vectors, one or more matrices, one or more tensors, one or more character strings, or any suitable combination thereof that can indicate or otherwise represent an operational load experienced by the intermediate battery 110 at, or otherwise as of, the current time/date 602. As a non-limiting example, the current battery operational load 604 can indicate or otherwise represent how much total electricity (e.g., measured in kilowatt-hours, megawatt-hours, or gigawatt-hours) is stored within the intermediate battery 110 at the current time/date 602. As another non-limiting example, the current battery operational load 604 can indicate or otherwise represent a total or net rate (e.g., measured in kilowatts or megawatts) at which electricity is being routed to the intermediate battery 110 by the set of vehicular charging stations 106. As another non-limiting example, the current battery operational load 604 can indicate or otherwise represent a total or net rate (e.g., measured in kilowatts or megawatts) at which electricity is being routed from the intermediate battery 110 by the set of vehicular charging stations 106. In various cases, the current battery operational load 604 can be read, measured, captured, or otherwise electronically quantified by any suitable voltage meters, amperage meters, or other electronic sensors that are integrated with the intermediate battery 110 or that are integrated with the set of vehicular charging stations 106.

In various aspects, as shown, the current operational context 502 can comprise a battery operational load history 606. In various instances, the battery operational load history 606 can be one or more scalars, one or more vectors, one or more matrices, one or more tensors, one or more character strings, or any suitable combination thereof that can indicate or otherwise represent various operational loads experienced by the intermediate battery 110 at, or otherwise as of, each of various past or previous times/dates. As a non-limiting example, the battery operational load history 606 can be or comprise a timeseries showing how much total electricity was stored within the intermediate battery 110 at each of any suitable number of prior times/dates. As another non-limiting example, the battery operational load history 606 can be or comprise a timeseries showing total or net rates at which electricity was being routed to the intermediate battery 110 by the set of vehicular charging stations 106 at each of any suitable number of prior times/dates. As yet another non-limiting example, the battery operational load history 606 can be or comprise a timeseries showing total or net rates at which electricity was being routed from the intermediate battery 110 by the set of vehicular charging stations 106 at each of any suitable number of prior times/dates. In various cases, the battery operational load history 606 can have been recorded by any suitable voltage meters, amperage meters, or other electronic sensors that are integrated with the intermediate battery 110 or that are integrated with the set of vehicular charging stations 106.

In various aspects, as shown, the current operational context 502 can comprise a current grid operational load 608. In various instances, the current grid operational load 608 can be one or more scalars, one or more vectors, one or more matrices, one or more tensors, one or more character strings, or any suitable combination thereof that can indicate or otherwise represent an operational load experienced by the main electric grid 104 at, or otherwise as of, the current time/date 602. As a non-limiting example, the current grid operational load 608 can indicate or otherwise represent how much total electricity (e.g., measured in gigawatt-hours or terawatt hours) is stored within the main electric grid at the current time/date 602. As another non-limiting example, the current grid operational load 608 can indicate or otherwise represent a total or net rate (e.g., measured in gigawatts or terawatts) at which electricity is being routed to the main electric grid 104 by the set of vehicular charging stations 106 or by whatever other electricity generation equipment (e.g., industrial power plants) is part of the main electric grid 104. As another non-limiting example, the current grid operational load 608 can indicate or otherwise represent a total or net rate (e.g., measured in gigawatts or terawatts) at which electricity is being routed from the main electric grid 104 by the set of vehicular charging stations 106 or by whatever other electricity consumption equipment (e.g., commercial or residential buildings) is part of the main electric grid 104. In various cases, the current grid operational load 608 can be read, measured, captured, or otherwise electronically quantified by any suitable voltage meters, amperage meters, or other electronic sensors that are integrated with the main electric grid 104.

In various aspects, as shown, the current operational context 502 can comprise a grid operational load history 610. In various instances, the grid operational load history 610 can be one or more scalars, one or more vectors, one or more matrices, one or more tensors, one or more character strings, or any suitable combination thereof that can indicate or otherwise represent various operational loads experienced by the main electric grid 104 at, or otherwise as of, each of various past or previous times/dates. As a non-limiting example, the grid operational load history 610 can be or comprise a timeseries showing how much total electricity was stored within the main electric grid 104 at each of any suitable number of prior times/dates. As another non-limiting example, the grid operational load history 610 can be or comprise a timeseries showing total or net rates at which electricity was being routed to the main electric grid 104 by the set of vehicular charging stations 106 or by whatever other electricity power generation equipment is part of the main electric grid 104 at each of any suitable number of prior times/dates. As yet another non-limiting example, the grid operational load history 610 can be or comprise a timeseries showing total or net rates at which electricity was being routed from the main electric grid 104 by the set of vehicular charging stations 106 or by whatever other electricity power consumption equipment is part of the main electric grid 104 at each of any suitable number of prior times/dates. In various cases, the grid operational load history 610 can have been recorded by any suitable voltage meters, amperage meters, or other electronic sensors that are integrated with the main electric grid 104.

In various aspects, as shown, the current operational context 502 can comprise a current weather forecast 612. In various instances, the current weather forecast 612 can be one or more scalars, one or more vectors, one or more matrices, one or more tensors, one or more character strings, or any suitable combination thereof that can indicate or otherwise represent weather that is affecting the intelligent vehicular microgrid 102 or the main electric grid 104 at the current time/date 602, or that is forecasted at the current time/date 602 to affect the intelligent vehicular microgrid 102 or the main electric grid 104 in the near future (e.g., in the next few hours or days). As a non-limiting example, the current weather forecast 612 can be or comprise an atmospheric temperature that is affecting the intelligent vehicular microgrid 102 or the main electric grid 104 at the current time/date 602, or that is forecasted at the current time/date 602 to affect the intelligent vehicular microgrid 102 or the main electric grid 104 in the near future. As another non-limiting example, the current weather forecast 612 can be or comprise an atmospheric pressure that is affecting the intelligent vehicular microgrid 102 or the main electric grid 104 at the current time/date 602, or that is forecasted at the current time/date 602 to affect the intelligent vehicular microgrid 102 or the main electric grid 104 in the near future. As yet another non-limiting example, the current weather forecast 612 can be or comprise an atmospheric precipitation level that is affecting the intelligent vehicular microgrid 102 or the main electric grid 104 at the current time/date 602, or that is forecasted at the current time/date 602 to affect the intelligent vehicular microgrid 102 or the main electric grid 104 in the near future. As still another non-limiting example, the current weather forecast 612 can be or comprise an atmospheric wind speed that is affecting the intelligent vehicular microgrid 102 or the main electric grid 104 at the current time/date 602, or that is forecasted at the current time/date 602 to affect the intelligent vehicular microgrid 102 or the main electric grid 104 in the near future. In various cases, the current weather forecast 612 can be supplied or provided by any suitable meteorological sensors or by any suitable computing device of a meteorological service.

In various aspects, as shown, the current operational context 502 can comprise a current news report 614. In various instances, the current news report 614 can be one or more scalars, one or more vectors, one or more matrices, one or more tensors, one or more character strings, or any suitable combination thereof that can indicate or otherwise represent newsworthy events that might affect the intelligent vehicular microgrid 102 or the main electric grid 104 at the current time/date 602 or in the near future. As a non-limiting example, the current news report 614 can indicate that one or more power plants of the main electric grid 104 are, as of the current time/date 602, about to experience unexpected disruptions (e.g., such as due to economic or regulatory changes). As another non-limiting example, the current news report 614 can indicate that one or more alternative energy sources (e.g., natural gas utility) in a same geographic area as the intermediate battery 110 or as the main electric grid 104 are, as of the current time/date 602, about to experience unexpected disruptions (e.g., such as due to economic or regulatory changes). In various cases, the current news report 614 can be supplied or provided by any suitable computing device of a news reporting service.

In various aspects, the current operational context 502 can comprise any other suitable information that can pertain to the status or operation of the main electric grid 104, of the intermediate battery 110, or of the set of vehicular charging stations 106.

In various instances, the grid component 408 can execute the machine learning model 504 on the current operational context 502, and such execution can cause the machine learning model 504 to produce the discharge determination 506. As a non-limiting example, the grid component 408 can feed the current operational context 502 (e.g., the current time/date 602, the current battery operational load 604, the battery operational load history 606, the current grid operational load 608, the grid operational load history 610, the current weather forecast 612, the current news report 614) to an input layer of the machine learning model 504. In various instances, the current operational context 502 can complete a forward pass through one or more hidden layers of the machine learning model 504. In various cases, an output layer of the machine learning model 504 can compute the discharge determination 506, based on activation maps or intermediate features produced by the one or more hidden layers of the machine learning model 504. In any case, the discharge determination 506 can be any suitable electronic data that can be considered as governing or dictating how the intermediate battery 110 is to interact with the main electric grid 104.

In various aspects, the discharge determination 506 can comprise a binary classification label 616. In various instances, the binary classification label 616 can be a classification label that indicates that the current operational context 502 belongs to one of two possible classes (hence the term "binary"): a discharge-to-the-grid class, or a do-not-discharge-to-the-grid class. If the binary classification label 616 indicates the discharge-to-the-grid class, this can be interpreted to mean that the machine learning model 504 has determined or inferred that the current time/date 602 is an appropriate time for the surplus electricity that is cumulatively stored in the intermediate battery 110 to be discharged to the main electric grid 104. As some non-limiting examples, factors that favor the current time/date 602 being an appropriate time for discharging can include: the current battery operational load 604 indicating that the intermediate battery 110 has a non-negligible amount of surplus electricity to discharge; the current grid operational load 608 indicating that the main electric grid 104 is running low on electricity or is consuming electricity more quickly than it is generating electricity; or the current weather forecast 612 or the current news report 614 indicating information that might be expected to spike demand for electricity. On the other hand, if the binary classification label 616 indicates the do-not-discharge-to-the-grid class, this can be interpreted to mean that the machine learning model 504 has determined or inferred that the current time/date 602 is not an appropriate time for the surplus electricity (if any) that is cumulatively stored in the intermediate battery 110 to be discharged to the main electric grid 104. As some non-limiting examples, factors that favor the current time/date 602 being an inappropriate time for discharging can include: the current battery operational load 604 indicating that the intermediate battery 110 has a negligible amount of surplus electricity to discharge; the current grid operational load 608 indicating that the main electric grid 104 has more than enough electricity or is generating electricity more quickly than it is consuming electricity; or the current weather forecast 612 or the current news report 614 indicating information that would not be expected to spike demand for electricity.

In any case, the grid component 408 can abide by the binary classification label 616. For instance, if the binary classification label 616 indicates that the current time/date 602 is not appropriate for discharging, then the grid component 408 can prohibit or prevent the intermediate battery 110 from discharging the surplus electricity stored within it to the main electric grid 104 at the current time/date 602. In contrast, if the binary classification label 616 instead indicates that the current time/date 602 is appropriate for discharging, then the grid component 408 can cause the intermediate battery 110 to discharge an entirety of the surplus electricity stored within it to the main electric grid 104 at the current time/date 602.

However, in some aspects, if the binary classification label 616 indicates that the current time/date 602 is appropriate for discharging, the grid component 408 can cause the intermediate battery 110 to discharge less than an entirety of the surplus electricity stored within it to the main electric grid 104 at the current time/date 602. Indeed, in various instances, the discharge determination 506 can further comprise an electricity amount indicator 618. In various cases, the electricity amount indicator 618 can be a scalar that indicates (e.g., in absolute terms such as megawatts-hours, or relative terms such as battery percentage) how much of the electricity accumulated in the intermediate battery 110 is to be discharged to the main electric grid 104. In some cases, the electricity amount indicator 618 can be considered as a regression output of the machine learning model 504. In situations where the discharge determination 506 comprises the electricity amount indicator 618 and where the binary classification label 616 indicates the discharge-to-grid class, the grid component 408 can cause, at the current time/date 602, however much electricity is specified by the electricity amount indicator 618 to be discharged from the intermediate battery 110 to the main electric grid 104.

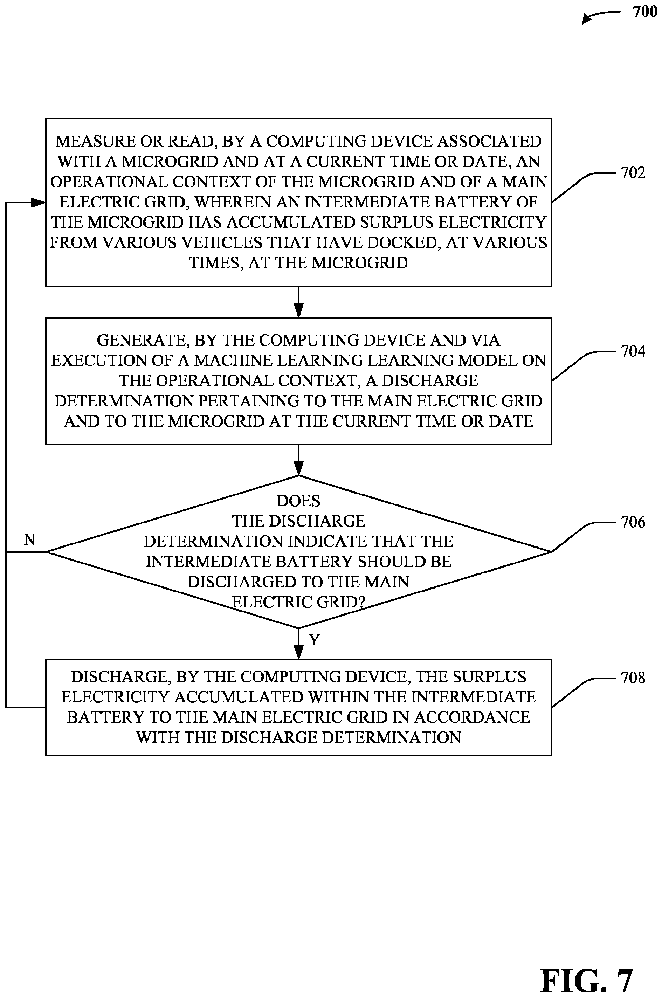

FIG. 7 illustrates an example, non-limiting computer-implemented method corresponding to FIG. 6.

In various embodiments, act 702 can comprise measuring or reading, by a computing device (e.g., via 408) associated with a microgrid (e.g., 102) and at a current time or date (e.g., 602), an operational context (e.g., 502) of the microgrid and of a main electric grid (e.g., 104). In various cases, an intermediate battery (e.g., 110) of the microgrid can have accumulated surplus electricity from various vehicles (e.g., 108) that have docked, at various times, at the microgrid (e.g., docked at 106).

In various aspects, act 704 can include generating, by the computing device (e.g., via 408) and via execution of a machine learning model (e.g., 504) on the operational context, a discharge determination (e.g., 506) pertaining to the main electric grid and to the microgrid at the current time/date.

In various instances, act 706 can include determining, by the computing device (e.g., via 408), whether the discharge determination indicates that the intermediate battery should be discharged to the main electric grid. If not, act 706 can proceed back to act 702. If so, act 706 can instead proceed to act 708.

In various aspects, act 708 can include discharging, by the computing device (e.g., via 408), the surplus electricity accumulated within the intermediate battery to the main electric grid in accordance with the discharge determination (e.g., the discharge determination might indicate that all of the surplus electricity should be discharged; or the discharge determination might instead indicate that only a portion of the surplus electricity should be discharged). In various cases, act 708 can proceed back to act 702.

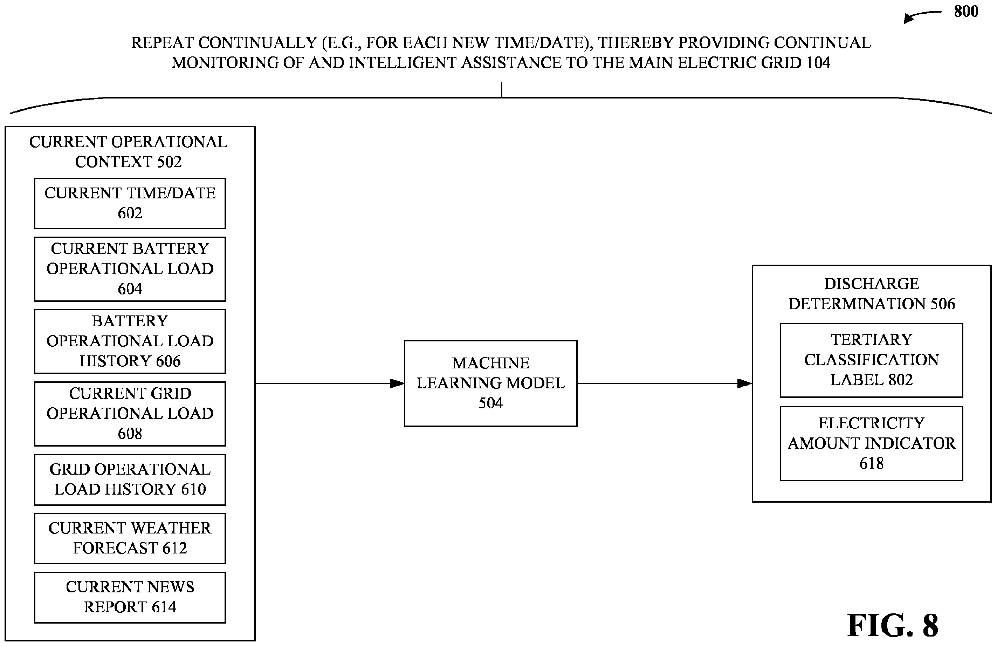

Now, consider FIG. 8. In various aspects, rather than comprising the binary classification label 616, the discharge determination 506 can instead comprise a tertiary classification label 802. In various instances, the tertiary classification label 802 can be a classification label that indicates that the current operational context 502 belongs to one of three possible classes (hence the term "tertiary"): a discharge-to-the-grid class, a charge-from-the-grid class, or a do-nothing class. If the tertiary classification label 802 indicates the discharge-to-the-grid class, this can be interpreted to mean that the machine learning model 504 has determined or inferred that the current time/date 602 is an appropriate time for the surplus electricity that is cumulatively stored in the intermediate battery 110 to be discharged to the main electric grid 104. As mentioned above, some factors that favor the current time/date 602 being an appropriate time for discharging the intermediate battery 110 can include: the current battery operational load 604 indicating that the intermediate battery 110 has a non-negligible amount of surplus electricity to discharge; the current grid operational load 608 indicating that the main electric grid 104 is running low on electricity or is consuming electricity more quickly than it is generating electricity; or the current weather forecast 612 or the current news report 614 indicating information that might be expected to spike demand for electricity. Now, if the tertiary classification label 802 indicates the charge-from-the-grid class, this can be interpreted to mean that the machine learning model 504 has determined or inferred that the current time/date 602 is an appropriate time for some electricity that is stored in the main electric grid 104 to be discharged to intermediate battery 110. As some non-limiting examples, some factors that favor the current time/date 602 being an appropriate time for charging the intermediate battery 110 can include: the current battery operational load 604 indicating that the intermediate battery 110 has a negligible amount of surplus electricity to discharge; the current grid operational load 608 indicating that the main electric grid 104 has more than enough electricity or is generating electricity more quickly than it is consuming electricity; or the current weather forecast 612 or the current news report 614 indicating information that would not be expected to spike demand for electricity. On the other hand, if the tertiary classification label 802 indicates the do-nothing class, this can be interpreted to mean that the machine learning model 504 has determined or inferred that the current time/date 602 is appropriate for neither discharging the intermediate battery 110 to the main electric grid 104 nor charging the intermediate battery 110 from the main electric grid 104. As some non-limiting examples, some factors that favor the current time/date 602 being appropriate for neither charging nor discharging of the intermediate battery 110 can include: the intermediate battery 110 having a non-negligible amount of surplus electricity to discharge while the main electric grid 104 simultaneously has more than enough electricity or is generating electricity more quickly than it is consuming electricity.

In situations where both the tertiary classification label 802 and the electricity amount indicator 618 are implemented, the electricity amount indicator 618 can be considered as representing how much electricity is to be discharged or charged in accordance with the tertiary classification label 802. As a non-limiting example, if the tertiary classification label 802 indicates the discharge-to-the-grid class, the electricity amount indicator 618 can represent or specify how much electricity is to be discharged from the intermediate battery 110 to the main electric grid 104. As another non-limiting example, if the tertiary classification label 802 indicates the charge-from-the-grid class, the electricity amount indicator 618 can represent or specify how much electricity is to be discharged from the main electric grid 104 to the intermediate battery 110.

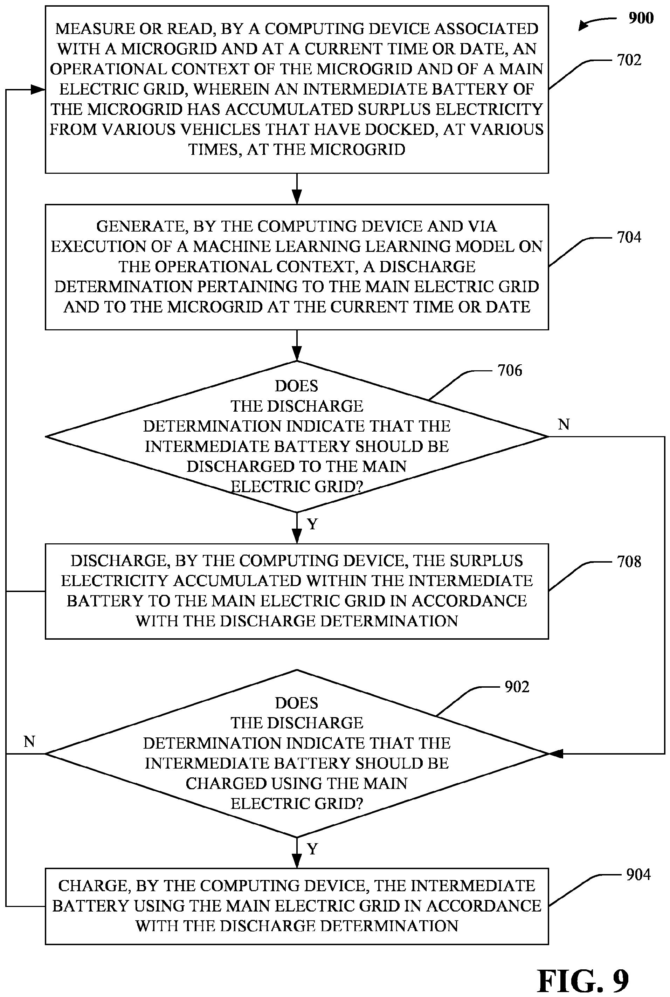

FIG. 9 illustrates an example, non-limiting computer-implemented method corresponding to FIG. 8.

In various embodiments, as shown, acts 702, 704, 706, and 708 can remain as described above, with the exception that a negative determination at act 706 no longer leads back to act 702. Instead, as shown in FIG. 8, a negative determination at act 706 (e.g., if the discharge determination does not indicate that the intermediate battery (e.g., 110) should be discharged to the main electric grid (e.g., 104)), act 706 can proceed to act 902.

In various embodiments, act 902 can include determining, by the computing device (e.g., via 408), whether the discharge determination indicates that the intermediate battery should be charged from or using the main electric grid. If not, act 902 can proceed back to act 702. If so, act 902 can proceed to act 904.

In various aspects, act 904 can include charging, by the computing device (e.g., via 408), the intermediate battery from or using the main electric grid in accordance with the discharge determination (e.g., the discharge determination can indicate how much electricity should be routed from the main electric grid 104 to the intermediate battery 110). In various cases, act 904 can proceed back to act 702.

In any case, the grid component 408 can execute the machine learning model 504 on the current operational context 502, so as to determine whether, if any, electricity should be discharged from the intermediate battery 110 to the main electric grid 104, or vice versa, at the current time/date 602. Such execution can be repeated regularly at any suitable intervals (e.g., for each new time/date), thereby facilitating intelligent interaction between the intermediate battery 110 and the main electric grid 104.

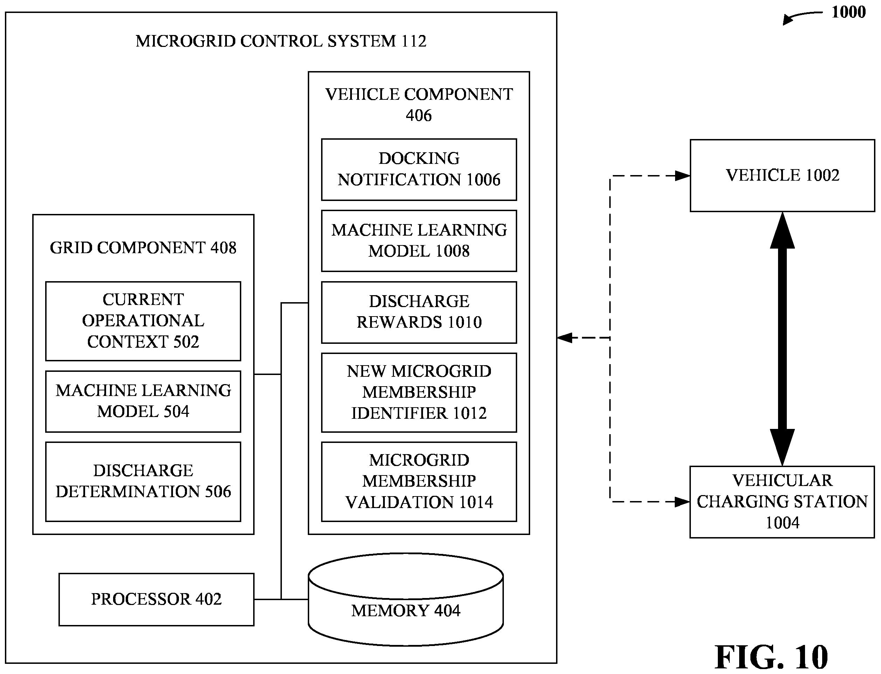

FIG. 10 illustrates a block diagram 1000 of an example, non-limiting system including a vehicle-side docking notification that can facilitate control of an intelligent vehicular microgrid in accordance with one or more embodiments described herein.

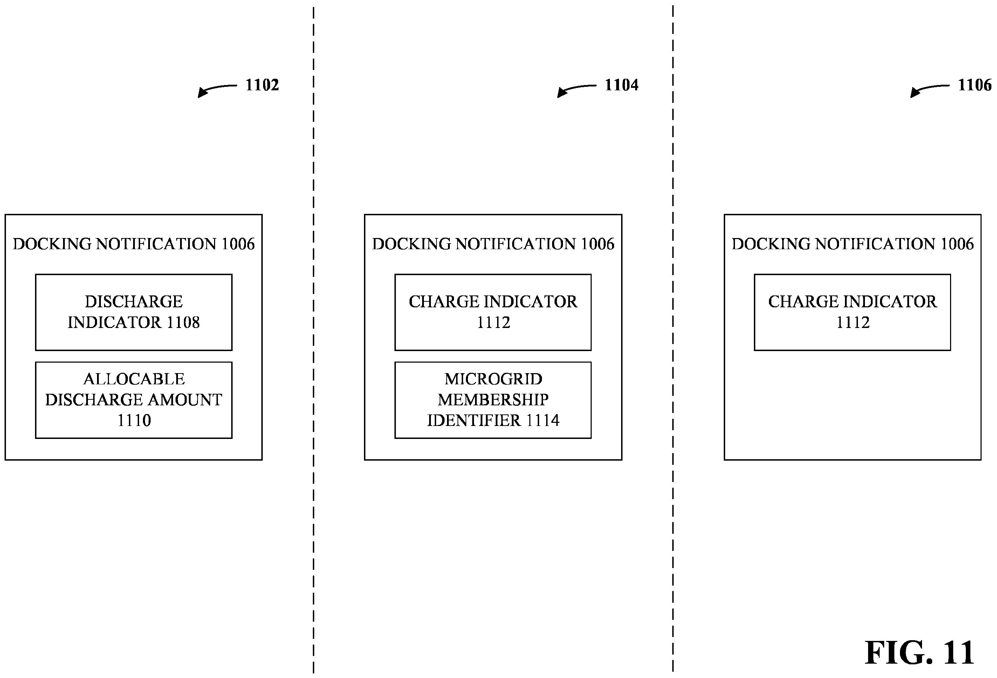

In various embodiments, a vehicle 1002 can be any of the set of vehicles 108, and a vehicular charging station 1004 can be any of the set of vehicular charging stations 106. In various aspects, the vehicle 1002 can dock, at whatever time is convenient for the vehicle 1002, at the vehicular charging station 1004. In response to such docking, the vehicle component 406 can electronically receive from the vehicle 1002 a docking notification 1006. In various instances, the docking notification 1006 can be any suitable electronic data that indicates, represents, or otherwise conveys whether the vehicle 1002 desires, plans, or is supposed to discharge surplus electricity at the vehicular charging station 1004, or instead desires, plans, or is supposed to charge its onboard battery at the vehicular charging station 1004. Non-limiting aspects are described with respect to FIG. 11.

FIG. 11 illustrates an example, non-limiting block diagram of the docking notification 1006 in accordance with one or more embodiments described herein.

As shown, FIG. 11 depicts three separate scenarios: a scenario 1102; a scenario 1104; and a scenario 1106.

In the scenario 1102, the docking notification 1006 can comprise a discharge indicator 1108. In various aspects, the discharge indicator 1108 can be any suitable electronic data (e.g., one or more scalars, one or more vectors, one or more matrices, one or more tensors, one or more character strings, or any suitable combination thereof) that specifies that the vehicle 1002 desires, plans, or is supposed to discharge surplus electricity at the vehicular charging station 1004. Furthermore, in the scenario 1102, the docking notification 1006 can further comprise an allocable discharge amount 1110. In various cases, the allocable discharge amount 1110 can be a scalar that indicates (e.g., in absolute terms such as kilowatt-hours, or relative terms such as battery percentage) how much of whatever electricity is stored in the onboard battery of the vehicle 1002 is to be discharged at the vehicular charging station 1004.

In the scenario 1104, the docking notification 1006 can comprise a charge indicator 1112. In various aspects, the charge indicator 1112 can be any suitable electronic data (e.g., one or more scalars, one or more vectors, one or more matrices, one or more tensors, one or more character strings, or any suitable combination thereof) that specifies that the vehicle 1002 desires, plans, or is supposed to charge its onboard battery at the vehicular charging station 1004. Furthermore, in the scenario 1104, the docking notification 1006 can further comprise a microgrid membership identifier 1114. In various cases, the microgrid membership identifier 1114 can be any suitable alphanumeric string or key that indicates, represents, or otherwise conveys that the vehicle 1002 has authority or permission to be charged by the intermediate battery 110. In other words, the microgrid membership identifier 1114 can be a unique token that proves that the vehicle 1002 is a contributing member of the intelligent vehicular microgrid 102.

In the scenario 1106, as shown, the docking notification 1006 can comprise the charge indicator 1112, but the docking notification 1006 can lack any microgrid membership identifier (e.g., can lack 1114). Such lack of any microgrid membership identifier can indicate, represent, or otherwise convey that the vehicle 1002 does not have authority or permission to be charged by the intermediate battery 110.

Referring back to FIG. 10, the vehicle component 406 can electronically store, electronically maintain, electronically control, or otherwise electronically access a machine learning model 1008. In various aspects, the machine learning model 1008 can have or otherwise exhibit any suitable internal architecture. As a non-limiting example, the machine learning model 1008 can have or otherwise exhibit a deep learning internal architecture. For instance, the machine learning model 1008 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers. However, these are mere non-limiting examples. In other aspects, the machine learning model 1008 can instead have any other suitable internal architecture, such as a support vector machine architecture, a naive Bayes architecture, or a random forest architecture.

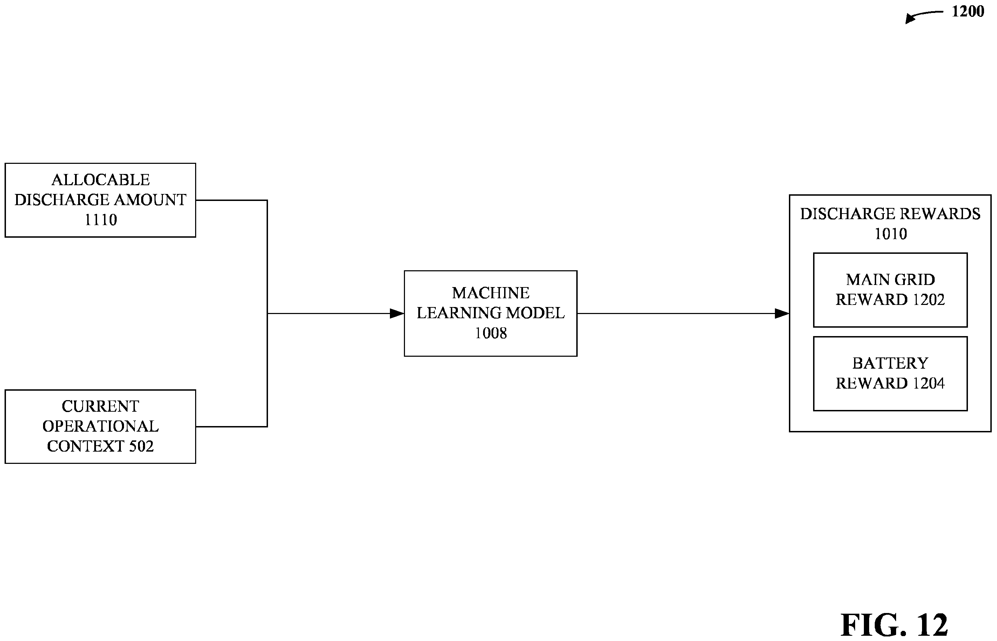

Now, suppose that the docking notification 1006 comprises the discharge indicator 1108 (e.g., that is, suppose that the scenario 1102 occurs). In such case, the vehicle 1002 can have a choice of whether to discharge its surplus electricity to the intermediate battery 110 or instead to the main electric grid 104. In various instances, it might be more beneficial or more appropriate for the vehicle 1002 to discharge its surplus electricity to the intermediate battery 110 instead of to the main electric grid 104. In other instances, it might be more beneficial or more appropriate for the vehicle 1002 to discharge its surplus electricity directly to the main electric grid 104 instead of to the intermediate battery 110. In various cases, the vehicle component 406 can determine, via the machine learning model 1008, which option is more beneficial at the time or date that the vehicle 1002 docks at the vehicular charging station 1004, and the vehicle component 406 can incentivize that more-beneficial option accordingly. In particular, in response to the docking notification 1006 comprising the discharge indicator 1108 (e.g., in response to the scenario 1102 occurring), the vehicle component 406 can execute the machine learning model 1008 on the allocable discharge amount 1110 and on the current operational context 502, so as to generate discharge rewards 1010. Non-limiting aspects are described with respect to FIG. 12.

FIG. 12 illustrates an example, non-limiting block diagram 1200 showing how the discharge rewards 1010 can be generated in accordance with one or more embodiments described herein.

In various instances, in response to the docking notification 1006 containing the discharge indicator 1108, the vehicle component 406 can execute the machine learning model 1008 on both the current operational context 502 (e.g., here, the current time/date 602 can represent the time/date at which the vehicle 1002 docks at the vehicular charging station 1004) and on the allocable discharge amount 1110, and such execution can cause the machine learning model 1008 to produce the discharge rewards 1010. As a non-limiting example, the vehicle component 406 can concatenate the current operational context 502 and the allocable discharge amount 1110 together and can feed that concatenation to an input layer of the machine learning model 1008. In various instances, that concatenation can complete a forward pass through one or more hidden layers of the machine learning model 1008. In various cases, an output layer of the machine learning model 1008 can compute the discharge rewards 1010, based on activation maps or intermediate features produced by the one or more hidden layers of the machine learning model 1008.

In any case, the discharge rewards 1010 can be any suitable electronic data that can indicate rewards that are earnable by or payable to the vehicle 1002, upon the vehicle 1002 discharging its surplus electricity to either the intermediate battery 110 or to the main electric grid 104. More specifically, the discharge rewards 1010 can comprise a main grid reward 1202 and a battery reward 1204. In various aspects, the main grid reward 1202 can be any suitable electronic data (e.g., one or more scalars, one or more vectors, one or more matrices, one or more tensors, one or more character strings, or any suitable combination thereof) that can indicate, represent, or otherwise convey a reward (e.g., a monetary amount, a discount amount, an amount of reward points) that the vehicle 1002 can earn upon discharging its surplus electricity to the main electric grid 104. In contrast, the battery reward 1204 can be any suitable electronic data (e.g., one or more scalars, one or more vectors, one or more matrices, one or more tensors, one or more character strings, or any suitable combination thereof) that can indicate, represent, or otherwise convey a reward (e.g., a monetary amount, a discount amount, an amount of reward points) that the vehicle 1002 can earn upon discharging its surplus electricity to the intermediate battery 110.

In various aspects, the machine learning model 1008 can vary the values or worths of the discharge rewards 1010, based upon whichever option the machine learning model 1008 determines to be more appropriate at the time that the vehicle 1002 docks at the vehicular charging station 1004.

As a non-limiting example, the machine learning model 1008 can infer that it is more appropriate or more beneficial for the vehicle 1002 to discharge its surplus electricity to the intermediate battery 110. In such case, the battery reward 1204 can be higher or more valuable than the main grid reward 1202, so as incentivize selection of discharging to the intermediate battery 110. Factors that favor it being more appropriate or beneficial to discharge to the intermediate battery 110 can include: the allocable discharge amount 1110 being negligible from the perspective of the main electric grid 104; the current battery operational load 604 indicating that the intermediate battery 110 is not nearing its maximum capacity; the current grid operational load 608 indicating that the main electric grid 104 has plenty of electricity or is generating electricity more quickly than it is consuming electricity; or the current weather forecast 612 or the current news report 614 indicating information that would not be expected to spike demand for electricity.

As another non-limiting example, the machine learning model 1008 can infer that it is more appropriate or more beneficial for the vehicle 1002 to discharge its surplus electricity directly to the main electric grid 104. In such case, the battery reward 1204 can be lower or less valuable than the main grid reward 1202, so as incentivize selection of discharging to the main electric grid 104. Factors that favor it being more appropriate or beneficial to discharge to the main electric grid 104 can include: the allocable discharge amount 1110 being non-negligible from the perspective of the main electric grid 104; the current battery operational load 604 indicating that the intermediate battery 110 is nearing its maximum capacity; the current grid operational load 608 indicating that the main electric grid 104 is running low on electricity or is consuming electricity more quickly than it is generating electricity; or the current weather forecast 612 or the current news report 614 indicating information that might be expected to spike demand for electricity.

Referring back to FIG. 10, the vehicle component 406 can electronically inform the vehicle 1002 of the discharge rewards 1010 and can electronically prompt the vehicle 1002 for a selection between discharging its surplus electricity to the intermediate battery 110 or instead to the main electric grid 104.

If the vehicle 1002 selects discharging to the main electric grid 104, the vehicle component 406 can cause the vehicular charging station 1004 to route however much electricity is indicated by the allocable discharge amount 1110 from the vehicle 1002 to the main electric grid 104, and the vehicle component 406 can disburse the main grid reward 1202 to the vehicle 1002.

In contrast, if the vehicle 1002 selects discharging to the intermediate battery 110, the vehicle component 406 can cause the vehicular charging station 1004 to route however much electricity is indicated by the allocable discharge amount 1110 from the vehicle 1002 to the intermediate battery 110, and the vehicle component 406 can disburse the battery reward 1204 to the vehicle 1002. Furthermore, in such case, the vehicle component 406 can determine whether or not the vehicle 1002 is already associated with a microgrid membership identifier. If the vehicle 1002 is not already associated with such a microgrid membership identifier, the vehicle component 406 can electronically assign a new microgrid membership identifier 1012 to the vehicle 1002. Just like the microgrid membership identifier 1114, the new microgrid membership identifier 1012 can be any suitable alphanumeric string or key that indicates, represents, or otherwise conveys that the vehicle 1002 now has authority or permission to be charged by the intermediate battery 110. In other words, the act of discharging surplus electricity to the intermediate battery 110 can be considered as earning the vehicle 1002 the future right to withdraw electricity from the intermediate battery 110.

Now, instead of comprising the discharge indicator 1108, suppose that the docking notification 1006 comprises the charge indicator 1112 (e.g., that is, suppose that the scenario 1104 or the scenario 1106 occurs). In such case, the vehicle 1002 can have a choice of whether to charge its onboard battery from the intermediate battery 110 or instead from the main electric grid 104.

In various instances, the vehicle 1002 can select to charge its onboard battery from the main electric grid 104. In such case, the vehicle component 406 can cause the vehicular charging station 1004 to route electricity from the main electric grid 104 to the vehicle 1002.

In other instances, however, the vehicle 1002 can select to charge its onboard battery from the intermediate battery 110. In such case, the vehicle component 406 can perform a microgrid membership validation 1014. In various aspects, the microgrid membership validation 1014 can be an electronic check in which the vehicle component 406 searches the docking notification 1006 for a valid microgrid membership identifier. If a valid microgrid membership identifier (e.g., 1114) is found in the docking notification 1006, the vehicle component 406 can conclude that the vehicle 1002 has authority or permission to charge from the intermediate battery 110. The vehicle component 406 can accordingly cause the vehicular charging station 1004 to route electricity from the intermediate battery 110 to the vehicle 1002 (e.g., as long as the intermediate battery 110 presently has enough electricity to charge the vehicle 1002). However, if no valid microgrid membership identifier is found in the docking notification 1006, the vehicle component 406 can conclude that the vehicle 1002 does not have authority or permission to charge from the intermediate battery 110. The vehicle component 406 can accordingly cause the vehicular charging station 1004 to route electricity from the main electric grid 104 to the vehicle 1002, notwithstanding the selection made by the vehicle 1002.

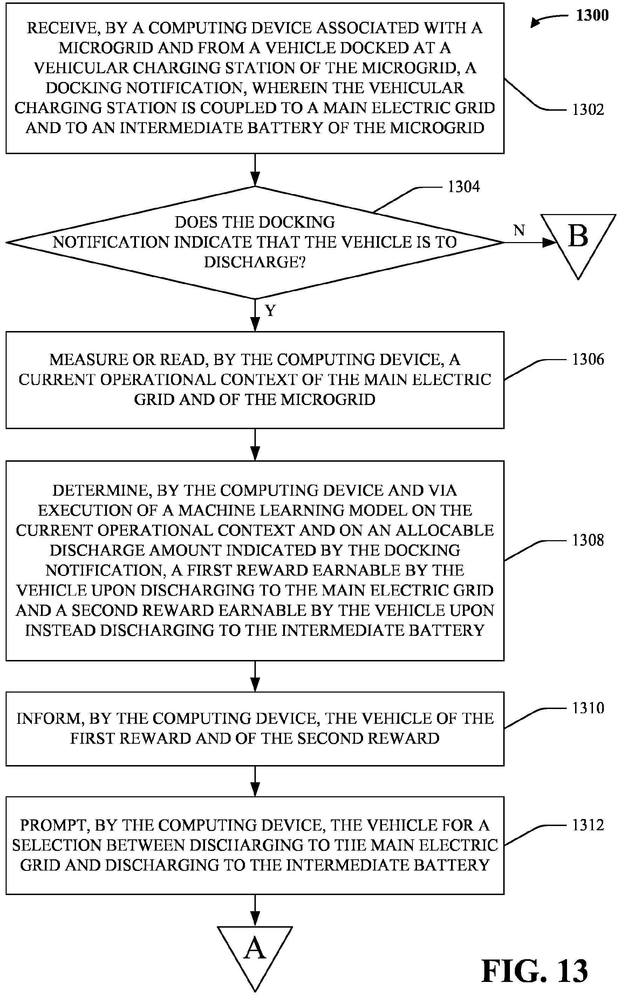

FIGs. 13-15 illustrate flow diagrams 1300, 1400, and 1500 of an example, non-limiting computer-implemented method that can facilitate vehicle-side operation of an intelligent vehicular microgrid in accordance with one or more embodiments described herein.

First, consider FIG. 13. In various embodiments, act 1302 can include receiving, by a computing device (e.g., via 406) associated with a microgrid (e.g., 102) and from a vehicle (e.g., 1002), docked at a vehicular charging station (e.g., 1004) of the microgrid, a docking notification (e.g., 1006). In various cases, the vehicular charging station can be coupled to a main electric grid (e.g., 104) and to an intermediate battery (e.g., 110) of the microgrid.

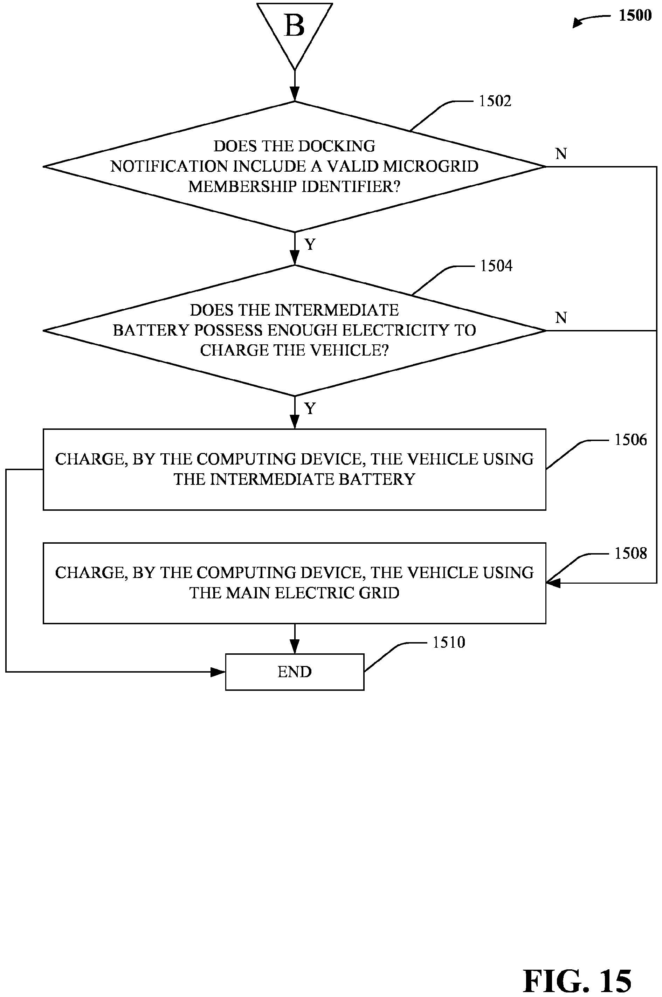

In various aspects, act 1304 can include determining, by the computing device (e.g., via 406), whether the docking notification indicates that the vehicle is to discharge at the vehicular charging station. If not, act 1304 can proceed to act 1502 shown in FIG. 15. If so, act 1304 can instead proceed to act 1306.

In various instances, act 1306 can include measuring or reading, by the computing device (e.g., via 406 or 408), a current operational context (e.g., 502) of the main electric grid and of the microgrid.

In various aspects, act 1308 can include determining, by the computing device (e.g., via 406) and via execution of a machine learning model (e.g., 1008) on the current operational context and on an allocable discharge amount (e.g., 1110) indicated by the docking notification, a first reward (e.g., 1202) earnable by the vehicle upon discharging to the main electric grid and a second reward (e.g., 1204) earnable by the vehicle upon instead discharging to the intermediate battery.

In various instances, act 1310 can include informing, by the computing device (e.g., via 406), the vehicle of the first reward and of the second reward (e.g., can involve visually rendering the first and second rewards on any suitable electronic display of the vehicle).

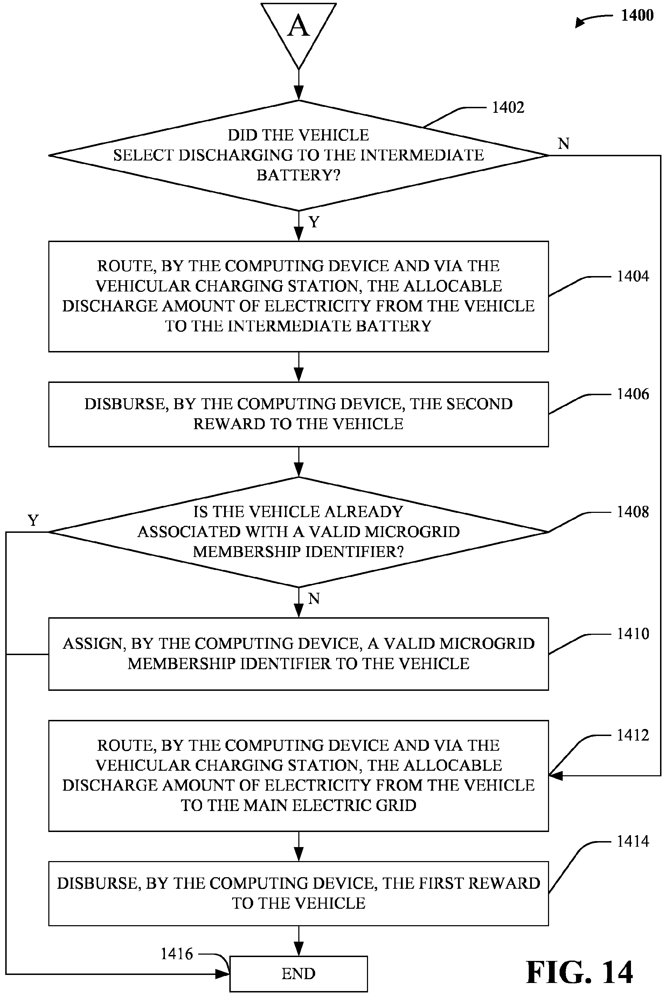

In various cases, act 1312 can include prompting, by the computing device (e.g., via 406), the vehicle for a selection between discharging to the main electric grid and discharging to the intermediate battery. As shown, act 1312 can proceed to act 1402 shown in FIG. 14.

Now, consider FIG. 14. In various embodiments, act 1402 can include determining, by the computing device (e.g., via 406), whether the vehicle selected discharging to the intermediate battery. If so, act 1402 can proceed to act 1404. If not, act 1402 can instead proceed to act 1412.

In various aspects, act 1404 can include routing, by the computing device (e.g., via 406) and via the vehicular charging station, the allocable discharge amount of electricity from the vehicle to the intermediate battery.

In various instances, act 1406 can include disbursing, by the computing device (e.g., via 406), the second reward to the vehicle.

In various cases, act 1408 can include determining, by the computing device (e.g., via 406), whether the vehicle is already associated with a valid microgrid membership identifier. If so, act 1408 can proceed to act 1416, where the computer-implemented method can end. If not, act 1408 can instead proceed to act 1410.

In various aspects, act 1410 can include assigning, by the computing device (e.g., via 406), a valid microgrid membership identifier (e.g., 1010) to the vehicle. In various cases, act 1410 can proceed to act 1416, where the computer-implemented method can end.

In various instances, act 1412 can include routing, by the computing device (e.g., via 406) and via the vehicular charging station, the allocable discharge amount of electricity from the vehicle to the main electric grid.

In various cases, act 1414 can include disbursing, by the computing device (e.g., via 406), the first reward to the vehicle. In various aspects, act 1414 can proceed to act 1416, where the computer-implemented method can end.

Now, consider FIG. 15. In various embodiments, act 1502 can include determining, by the computer device (e.g., via 406), whether the docking notification includes a valid microgrid membership identifier (e.g., 1114). If so, act 1502 can proceed to act 1504. If not, act 1502 can instead proceed to act 1508.

In various aspects, act 1504 can include determining, by the computing device (e.g., via 406), whether the intermediate battery possesses enough electricity to charge the vehicle. If so, act 1504 can proceed to act 1506. If not, act 1504 can instead proceed to act 1508.

In various instances, act 1506 can include charging, by the computing device (e.g., via 406), the vehicle using the intermediate battery. In various cases, act 1506 can proceed to act 1510, where the computer-implemented method can end.

In various aspects, act 1508 can include charging, by the computing device (e.g., via 406), the vehicle using the main electric grid. In various cases, act 1508 can proceed to act 1510, where the computer-implemented method can end.

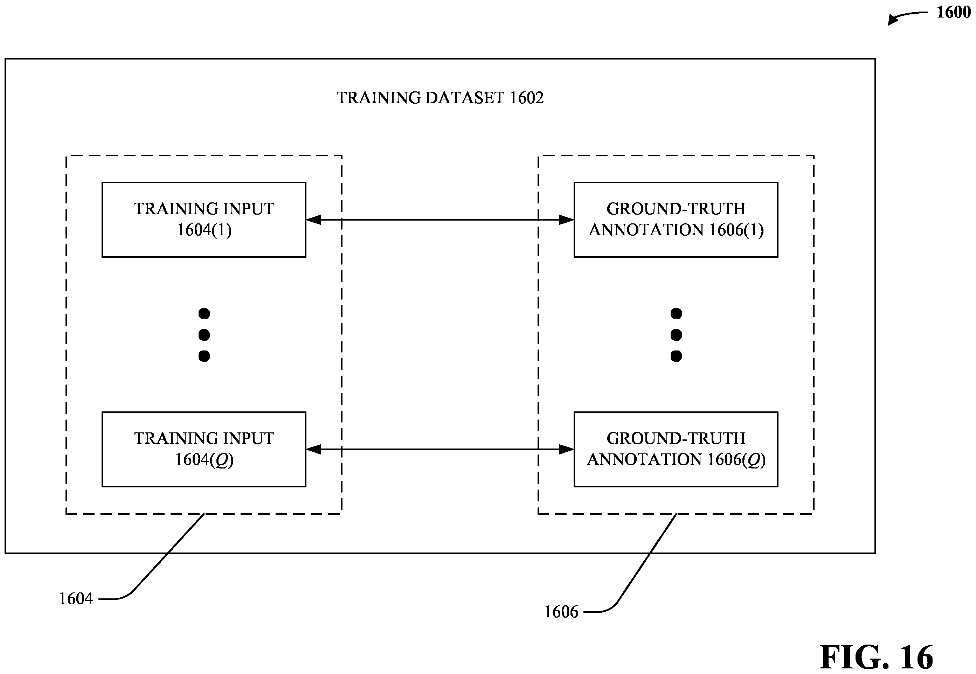

Now, in order for the discharge determination 506 and for the discharge rewards 1010 to be accurate, the machine learning model 504 and the machine learning model 1008 can first undergo training. As a non-limiting example, the machine learning model 504 and the machine learning model 1008 can undergo supervised training, as described with respect to FIGs. 16-17.

FIG. 16 illustrates an example, non-limiting block diagram 1600 of a training dataset 1602 that can be used to train the machine learning model 504 or the machine learning model 1008 in accordance with one or more embodiments described herein.

In various aspects, the training dataset 1602 can comprise a set of training inputs 1604. In various instances, the set of training inputs 1604 can include q inputs for any suitable positive integer q: a training input 1604(1) to a training input 1604(q). In various instances, if the training dataset 1602 is meant to train the machine learning model 504, then each of the set of training inputs 1604 can be a training operational context having the same format, size, or dimensionality as the current operational context 502. On the other hand, if the training dataset 1602 is meant to train the machine learning model 1008, then each of the set of training inputs 1604 can be a concatenation of a training operational context having the same format, size, or dimensionality as the current operational context 502 and of a training allocable discharge amount having the same format, size, or dimensionality as the allocable discharge amount 1110.

In various aspects, the training dataset 1602 can comprise a set of ground-truth annotations 1606 that can respectively correspond to the set of training inputs 1604. Accordingly, since the set of training inputs 1604 can have q inputs, the set of ground-truth annotations 1606 can have q annotations: a ground-truth annotation 1606(1) to a ground-truth annotation 1606(q). In various instances, if the training dataset 1602 is meant to train the machine learning model 504, then each of the set of ground-truth annotations 1606 can be a correct or accurate discharge determination (having the same format, size, or dimensionality as the discharge determination 506) that is known or deemed to correspond to a respective one of the set of training inputs 1604. On the other hand, if the training dataset 1602 is meant to train the machine learning model 1008, then each of the set of ground-truth annotations 1606 can be correct or accurate discharge rewards (having the same format, size, or dimensionality as the discharge rewards 1010) that is known or deemed to correspond to a respective one of the set of training inputs 1604.

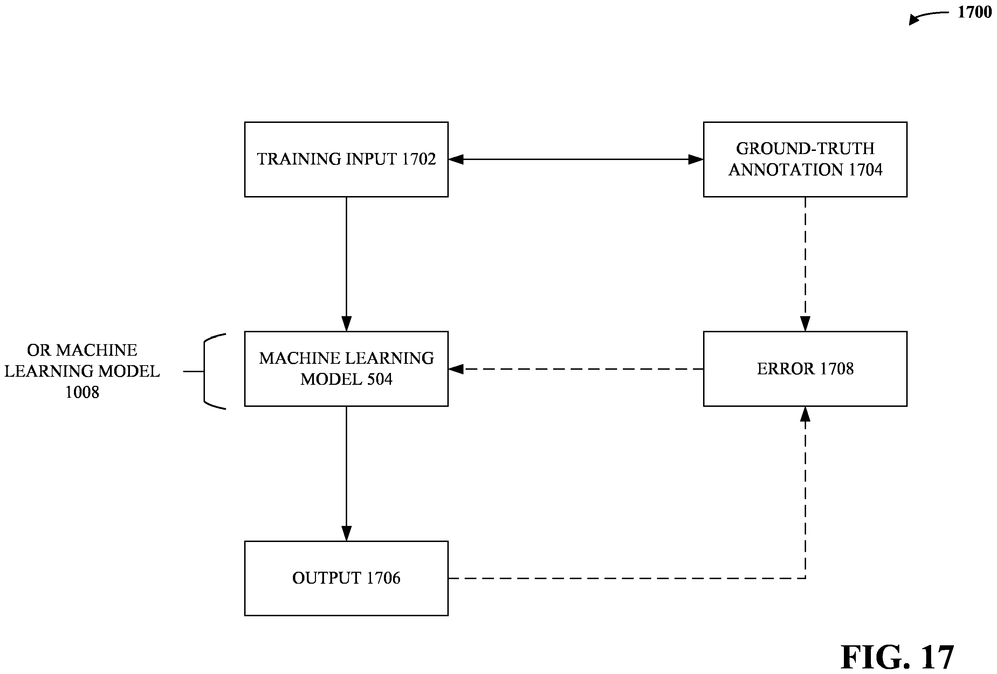

FIG. 17 illustrates an example, non-limiting block diagram 1700 showing how the machine learning model 504 or the machine learning model 1008 can be trained in accordance with one or more embodiments described herein.

In various aspects, prior to beginning training, trainable internal parameters (e.g., convolutional kernels, weight matrices, bias values) of the machine learning model 504 (or of the machine learning model 1008) can be initialized in any suitable fashion (e.g., via random initialization).

In various aspects, a training input 1702 and a ground-truth annotation 1704 corresponding to the training input 1702 can be selected from the training dataset 1602. In various instances, the machine learning model 504 (or the machine learning model 1008) can be executed on the training input 1702, thereby causing the machine learning model 504 (or the machine learning model 1008) to produce an output 1706. More specifically, in some cases, an input layer of the machine learning model 504 (or the machine learning model 1008) can receive the training input 1702, the training input 1702 can complete a forward pass through one or more hidden layers of the machine learning model 504 (or the machine learning model 1008), and an output layer of the machine learning model 504 (or the machine learning model 1008) can compute the output 1706 based on activation maps or intermediate features provided by the one or more hidden layers of the machine learning model 504 (or the machine learning model 1008).

Note that the format, size, or dimensionality of the output 1706 can be dictated by the number, arrangement, sizes, or other characteristics of the neurons, convolutional kernels, or other internal parameters of the output layer (or of any other layers) of the machine learning model 504 (or of the machine learning model 1008). Accordingly, the output 1706 can be forced to have any desired format, size, or dimensionality, by adding, removing, or otherwise adjusting characteristics of the output layer (or of any other layers) of the machine learning model 504 (or of the machine learning model 1008).

In various aspects, if the output 1706 is produced by the machine learning model 504, the output 1706 can be considered as the predicted or inferred discharge determination that the machine learning model 504 believes should correspond to the training input 1702. On the other hand, if the output 1706 is produced by the machine learning model 1008, the output 1706 can be considered as the predicted or inferred discharge rewards that the machine learning model 1008 believes should correspond to the training input 1702. In any case, the ground-truth annotation 1704 can be considered as whatever correct or accurate result (e.g., correct or accurate discharge determination, correct or accurate discharge rewards) that is known or deemed to correspond to the training input 1702. Note that, if the machine learning model 504 (or the machine learning model 1008) has so far undergone no or little training, then the output 1706 can be highly inaccurate. In other words, the output 1706 can be very different from the ground-truth annotation 1704.

In various aspects, an error 1708 (e.g., mean absolute error, mean squared error, cross-entropy error) between the output 1706 and the ground-truth annotation 1704 can be computed. In various instances, the trainable internal parameters of the machine learning model 504 (or the machine learning model 1008) can be incrementally updated, via backpropagation (e.g., stochastic gradient descent), based on the error 1708.

In various cases, such execution-and-update procedure can be repeated for any suitable number of training inputs (e.g., for each training input in the training dataset 1602). This can ultimately cause the trainable internal parameters of the machine learning model 504 (or the machine learning model 1008) to become iteratively optimized for accurately generating discharge determinations (or discharge rewards). In various aspects, any suitable training batch sizes, any suitable error/loss functions, or any suitable training termination criteria can be implemented.

Although the above description mainly describes the machine learning model 504 and the machine learning model 1008 as being trained in supervised fashion, this is a mere non-limiting example for ease of illustration and explanation. In various cases, any other suitable training paradigms (e.g., unsupervised training, reinforcement learning) can be implemented to train the machine learning model 504 or the machine learning model 1008.

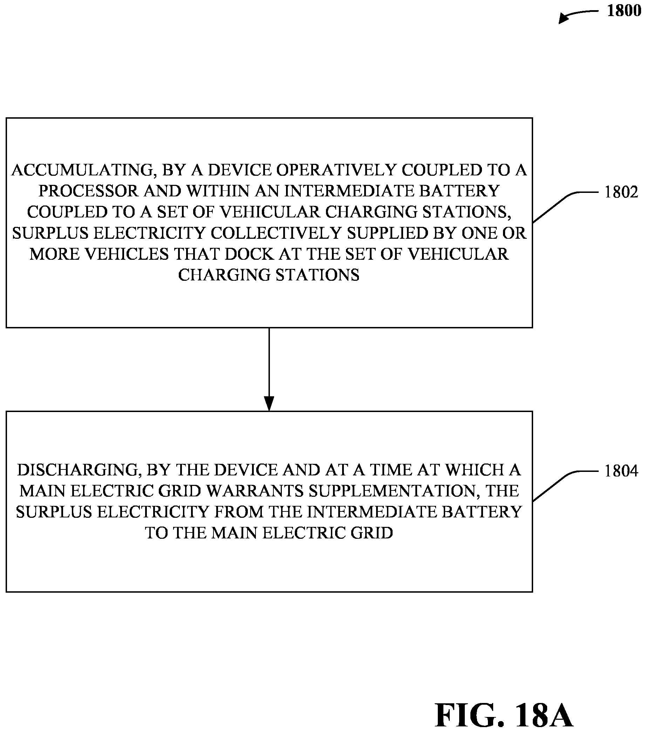

FIG. 18A illustrates a flow diagram of an example, non-limiting computer-implemented method 1800 that can facilitate control of an intelligent vehicular microgrid in accordance with one or more embodiments described herein. In various cases, the microgrid control system 112 can facilitate the computer-implemented method 1800.

In various embodiments, act 1802 can include accumulating, by a device (e.g., via 406) operatively coupled to a processor (e.g., 402) and within an intermediate battery (e.g., 110) coupled to a set of vehicular charging stations (e.g., 106), surplus electricity collectively supplied by one or more vehicles (e.g., 108) that dock at the set of vehicular charging stations.

In various aspects, act 1804 can include discharging, by the device (e.g., via 408) and at a time at which a main electric grid (e.g., 104) warrants supplementation, the surplus electricity from the intermediate battery to the main electric grid.

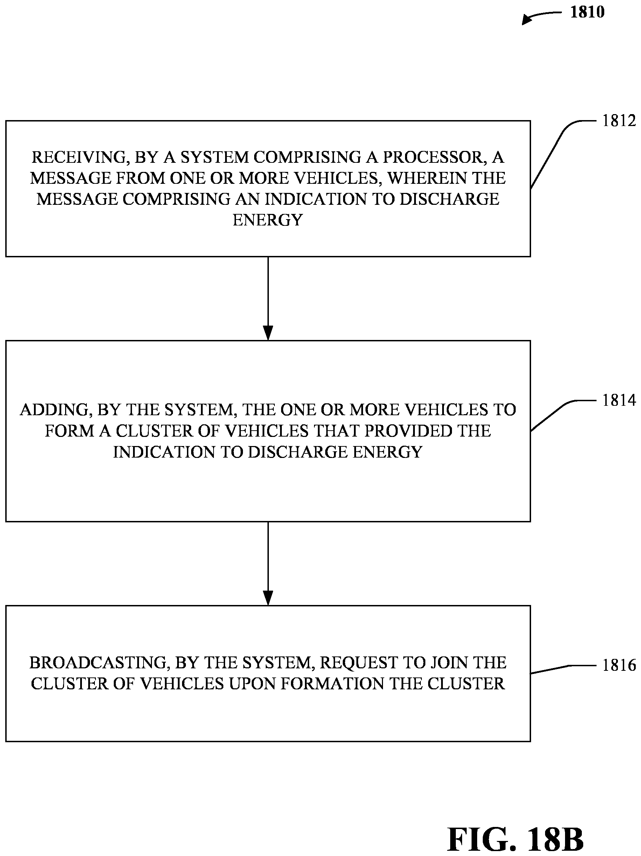

FIG. 18B illustrates a flow diagram of an example, non-limiting computer-implemented method 1810 that can facilitate control of an intelligent vehicular microgrid in accordance with one or more embodiments described herein. In various cases, the microgrid control system 112 can facilitate the computer-implemented method 1810.

In various embodiments, act 1812 can include receiving, by a system comprising a processor, a message from one or more vehicles, wherein the message comprising an indication to discharge energy. In various aspects, act 1814 can include adding, by the system, the one or more vehicles to form a cluster of vehicles that provided the indication to discharge energy. In various aspects, act 1816 can include broadcasting, by the system, request to join the cluster of vehicles upon formation the cluster.

Although not explicitly shown in FIGs. 18A and 18B, the device can determine the time at which the main electric grid warrants supplementation, via execution of a machine learning model (e.g., 504). In various aspects, the machine learning model can classify a current time (e.g., 602) as either being or not being the time at which the main electric grid warrants supplementation, based on a current or historical operational load of the intermediate battery (e.g., 604, 606), a current or historical operational load of the main electric grid (e.g., 608, 610), or a current weather forecast (e.g., 612) associated with the main electric grid. In various instances, the device can discharge less than all of the surplus electricity to the main electric grid at the time at which the main electric grid warrants supplementation, and the machine learning model can determine how much (e.g., 618) of the surplus electricity to discharge.

Although not explicitly shown in FIGs. 18A and 18B, the computer-implemented method 1800 can comprise: receiving, by the device (e.g., via 406) and from a first vehicle (e.g., 1002) that is docked at a respective one (e.g., 1004) of the set of vehicular charging stations, an electronic notification (e.g., 1006) indicating that the first vehicle is to discharge (e.g., 1108); determining, by the device (e.g., via 406) and via execution of a machine learning model (e.g., 1008), a first reward (e.g., 1202) associated with the first vehicle discharging to the main electric grid and a second reward (e.g., 1204) associated with the first vehicle instead discharging to the intermediate battery; and informing, by the device (e.g., via 406), the first vehicle that the first reward is payable upon discharging to the main electric grid and that the second reward is payable upon instead discharging to the intermediate battery.

Although not explicitly shown in FIGs. 18A and 18B, the computer-implemented method 1800 can comprise: receiving, by the device (e.g., via 406) and from a first vehicle (e.g., 1002) that is docked at a respective one (e.g., 1004) of the set of vehicular charging stations, an electronic notification (e.g., 1006) indicating that the first vehicle is to charge (e.g., 1112); charging, by the device (e.g., via 406), the first vehicle from the intermediate battery, in response to determining that the electronic notification contains a valid microgrid account identifier (e.g., 1114); and charging, by the device (e.g., via 406), the first vehicle from the main electric grid, in response to determining that the electronic notification lacks the valid microgrid account identifier.

Although not explicitly shown in FIGs. 18A and 18B, the set of vehicular charging stations and the intermediate battery can be located at a parking lot.

Although not explicitly shown in FIGs. 18A and 18B, the intermediate battery can be trickle charged by the main electric grid during night.

As used herein, the term "negligible" can mean "below any suitable threshold". Conversely, the term "non-negligible" can mean "above any suitable threshold".

In various instances, machine learning algorithms or models can be implemented in any suitable way to facilitate any suitable aspects described herein. To facilitate some of the above-described machine learning aspects of various embodiments, consider the following discussion of artificial intelligence (AI). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, *zₙ*), to a confidence that the input belongs to a class, as by f(z) = *confidence*(*class*)*.* Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

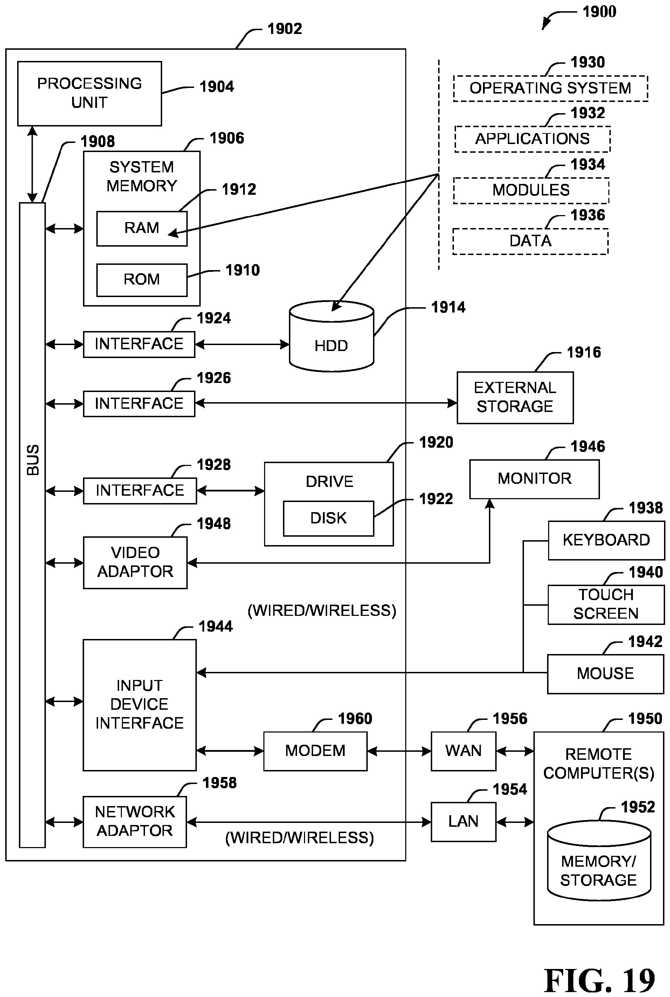

In order to provide additional context for various embodiments described herein, FIG. 19 and the following discussion are intended to provide a brief, general description of a suitable computing environment 1900 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 19, the example environment 1900 for implementing various embodiments of the aspects described herein includes a computer 1902, the computer 1902 including a processing unit 1904, a system memory 1906 and a system bus 1908. The system bus 1908 couples system components including, but not limited to, the system memory 1906 to the processing unit 1904. The processing unit 1904 can be any of various commercially available processors. Dual microprocessors and other multi-processor architectures can also be employed as the processing unit 1904.

The system bus 1908 can be any of several types of bus structure that can further interconnect to a memory bus (with or without a memory controller), a peripheral bus, and a local bus using any of a variety of commercially available bus architectures. The system memory 1906 includes ROM 1910 and RAM 1912. A basic input/output system (BIOS) can be stored in a non-volatile memory such as ROM, erasable programmable read only memory (EPROM), EEPROM, which BIOS contains the basic routines that help to transfer information between elements within the computer 1902, such as during startup. The RAM 1912 can also include a high-speed RAM such as static RAM for caching data.

The computer 1902 further includes an internal hard disk drive (HDD) 1914 (e.g., EIDE, SATA), one or more external storage devices 1916 (e.g., a magnetic floppy disk drive (FDD) 1916, a memory stick or flash drive reader, a memory card reader, etc.) and a drive 1920, e.g., such as a solid state drive, an optical disk drive, which can read or write from a disk 1922, such as a CD-ROM disc, a DVD, a BD, etc. Alternatively, where a solid state drive is involved, disk 1922 would not be included, unless separate. While the internal HDD 1914 is illustrated as located within the computer 1902, the internal HDD 1914 can also be configured for external use in a suitable chassis (not shown). Additionally, while not shown in environment 1900, a solid state drive (SSD) could be used in addition to, or in place of, an HDD 1914. The HDD 1914, external storage device(s) 1916 and drive 1920 can be connected to the system bus 1908 by an HDD interface 1924, an external storage interface 1926 and a drive interface 1928, respectively. The interface 1924 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1902, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1912, including an operating system 1930, one or more application programs 1932, other program modules 1934 and program data 1936. All or portions of the operating system, applications, modules, or data can also be cached in the RAM 1912. The systems and methods described herein can be implemented utilizing various commercially available operating systems or combinations of operating systems.

Computer 1902 can optionally comprise emulation technologies. For example, a hypervisor (not shown) or other intermediary can emulate a hardware environment for operating system 1930, and the emulated hardware can optionally be different from the hardware illustrated in FIG. 19. In such an embodiment, operating system 1930 can comprise one virtual machine (VM) of multiple VMs hosted at computer 1902. Furthermore, operating system 1930 can provide runtime environments, such as the Java runtime environment or the .NET framework, for applications 1932. Runtime environments are consistent execution environments that allow applications 1932 to run on any operating system that includes the runtime environment. Similarly, operating system 1930 can support containers, and applications 1932 can be in the form of containers, which are lightweight, standalone, executable packages of software that include, e.g., code, runtime, system tools, system libraries and settings for an application.

Further, computer 1902 can be enable with a security module, such as a trusted processing module (TPM). For instance with a TPM, boot components hash next in time boot components, and wait for a match of results to secured values, before loading a next boot component. This process can take place at any layer in the code execution stack of computer 1902, e.g., applied at the application execution level or at the operating system (OS) kernel level, thereby enabling security at any level of code execution.

A user can enter commands and information into the computer 1902 through one or more wired/wireless input devices, e.g., a keyboard 1938, a touch screen 1940, and a pointing device, such as a mouse 1942. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1904 through an input device interface 1944 that can be coupled to the system bus 1908, but can be connected by other interfaces, such as a parallel port, an IEEE 1394 serial port, a game port, a USB port, an IR interface, a BLUETOOTH^{®} interface, etc.

A monitor 1946 or other type of display device can be also connected to the system bus 1908 via an interface, such as a video adapter 1948. In addition to the monitor 1946, a computer typically includes other peripheral output devices (not shown), such as speakers, printers, etc.

The computer 1902 can operate in a networked environment using logical connections via wired or wireless communications to one or more remote computers, such as a remote computer(s) 1950. The remote computer(s) 1950 can be a workstation, a server computer, a router, a personal computer, portable computer, microprocessor-based entertainment appliance, a peer device or other common network node, and typically includes many or all of the elements described relative to the computer 1902, although, for purposes of brevity, only a memory/storage device 1952 is illustrated. The logical connections depicted include wired/wireless connectivity to a local area network (LAN) 1954 or larger networks, e.g., a wide area network (WAN) 1956. Such LAN and WAN networking environments are commonplace in offices and companies, and facilitate enterprise-wide computer networks, such as intranets, all of which can connect to a global communications network, e.g., the Internet.

When used in a LAN networking environment, the computer 1902 can be connected to the local network 1954 through a wired or wireless communication network interface or adapter 1958. The adapter 1958 can facilitate wired or wireless communication to the LAN 1954, which can also include a wireless access point (AP) disposed thereon for communicating with the adapter 1958 in a wireless mode.

When used in a WAN networking environment, the computer 1902 can include a modem 1960 or can be connected to a communications server on the WAN 1956 via other means for establishing communications over the WAN 1956, such as by way of the Internet. The modem 1960, which can be internal or external and a wired or wireless device, can be connected to the system bus 1908 via the input device interface 1944. In a networked environment, program modules depicted relative to the computer 1902 or portions thereof, can be stored in the remote memory/storage device 1952. It will be appreciated that the network connections shown are example and other means of establishing a communications link between the computers can be used.

When used in either a LAN or WAN networking environment, the computer 1902 can access cloud storage systems or other network-based storage systems in addition to, or in place of, external storage devices 1916 as described above, such as but not limited to a network virtual machine providing one or more aspects of storage or processing of information. Generally, a connection between the computer 1902 and a cloud storage system can be established over a LAN 1954 or WAN 1956 e.g., by the adapter 1958 or modem 1960, respectively. Upon connecting the computer 1902 to an associated cloud storage system, the external storage interface 1926 can, with the aid of the adapter 1958 or modem 1960, manage storage provided by the cloud storage system as it would other types of external storage. For instance, the external storage interface 1926 can be configured to provide access to cloud storage sources as if those sources were physically connected to the computer 1902.

The computer 1902 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

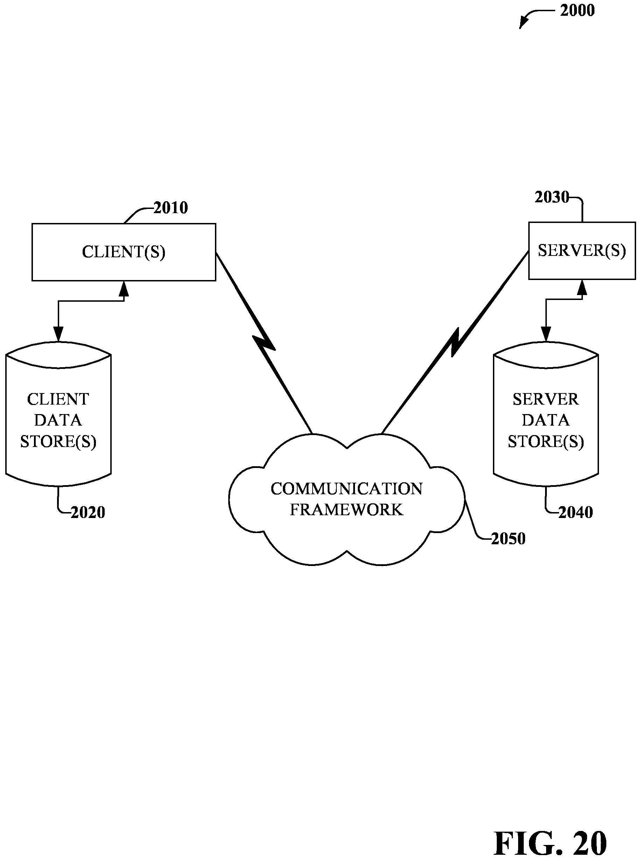

FIG. 20 is a schematic block diagram of a sample computing environment 2000 with which the disclosed subject matter can interact. The sample computing environment 2000 includes one or more client(s) 2010. The client(s) 2010 can be hardware or software (e.g., threads, processes, computing devices). The sample computing environment 2000 also includes one or more server(s) 2030. The server(s) 2030 can also be hardware or software (e.g., threads, processes, computing devices). The servers 2030 can house threads to perform transformations by employing one or more embodiments as described herein, for example. One possible communication between a client 2010 and a server 2030 can be in the form of a data packet adapted to be transmitted between two or more computer processes. The sample computing environment 2000 includes a communication framework 2050 that can be employed to facilitate communications between the client(s) 2010 and the server(s) 2030. The client(s) 2010 are operably connected to one or more client data store(s) 2020 that can be employed to store information local to the client(s) 2010. Similarly, the server(s) 2030 are operably connected to one or more server data store(s) 2040 that can be employed to store information local to the servers 2030.

Various embodiments may be a system, a method, an apparatus or a computer program product at any possible technical detail level of integration. The computer program product can include a computer readable storage medium (or media) having computer readable program instructions thereon for causing a processor to carry out aspects of various embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform various aspects.

Various aspects are described herein with reference to flowchart illustrations or block diagrams of methods, apparatus (systems), and computer program products according to various embodiments. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that various aspects can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects of various embodiments described herein are presented in the following clauses.
1. A computer-implemented method, comprising: receiving, by a system comprising a processor, a message from one or more vehicles, wherein the message comprising an indication to discharge energy; adding, by the system, the one or more vehicles to form a cluster of vehicles that provided the indication to discharge energy; and broadcasting, by the system, request to join the cluster of vehicles upon formation the cluster.
2. The computer-implemented method of any preceding clause, further comprising: accumulating, by the system, electricity supplied by one or more vehicles connected to the charging station and storing the electricity into an intermediate battery.
3. The computer-implemented method of any preceding clause, further comprising: receiving, by the system, an indication that the intermediate battery is full.
4. The computer-implemented method of any preceding clause, further comprising: establishing, by the system, communication with grid in response to receiving an indication that the intermediate battery is full.
5. The computer-implemented method of any preceding clause, further comprising: transmitting, by the system, electricity to grid in response to receiving an indication that the intermediate battery is full.
6. The computer-implemented method of any preceding clause, further comprising: extracting, by the system, payment information from one or more vehicles connected to the charging station; and transmitting, by the system, payment using the payment information to all cars that joined the cluster.
7. The computer-implemented method of any preceding clause, wherein the message comprises vehicle information, amount of electricity for discharging, payment information, health of the battery, amount of time available to discharge.
8. The computer-implemented method of any preceding clause, wherein the request comprises a charging station identification, a charging station location, a payment offer information.
   Any suitable combination of sets or subsets of clauses 1-8 can be implemented.
9. A system, comprising: a memory that stores computer executable components; and a processor that executes the computer executable components stored in the memory, wherein the computer executable components comprise: a communication component that receives a message from one or more vehicles, wherein the message comprising an indication to discharge energy; a grid component that adds the one or more vehicles to form a cluster of vehicles that provided the indication to discharge electricity; and the communication component that broadcasts a request to join the cluster of vehicles upon formation the cluster.
10. The system of any preceding clause, wherein the computer executable components further comprise: a vehicle component that accumulates electricity supplied by one or more vehicles connected to the charging station and storing the electricity into an intermediate battery.
11. The system of any preceding clause, wherein the communication component receives an indication that the intermediate battery is full.
12. The system of any preceding clause, wherein the communication component establishes communication with grid in response to receiving an indication that the intermediate battery is full.
13. The system of any preceding clause, wherein the grid component transmits electricity to grid in response to receiving an indication that the intermediate battery is full.
14. The system of any preceding clause, wherein the computer executable components further comprise: a vehicle component that extracts payment information from one or more vehicles connected to the charging station and transmits payment using the payment information to all cars that joined the cluster.
15. The system of any preceding clause, wherein the message comprises vehicle information, amount of electricity for discharging, payment information, health of the battery, amount of time available to discharge.
16. The system of any preceding clause wherein the request comprises a charging station identification, a charging station location, a payment offer information.
   Any suitable combination of sets or subsets of clauses 9-16 can be implemented.
17. A non-transitory machine-readable medium, comprising executable instructions that, when executed by a processor, facilitate performance of operations, comprising: receiving a message from one or more vehicles, wherein the message comprising an indication to discharge energy; adding the one or more vehicles to form a cluster of vehicles that provided the indication to discharge energy; and broadcasting request to join the cluster of vehicles upon formation the cluster.
18. The non-transitory machine-readable medium of any preceding clause, further comprising: accumulating, by the system, electricity supplied by one or more vehicles connected to the charging station and storing the electricity into an intermediate battery; receiving an indication that the intermediate battery is full, establishing communication with grid in response to receiving an indication that the intermediate battery is full; and transmitting electricity to grid in response to receiving an indication that the intermediate battery is full.
19. The non-transitory machine-readable medium of any preceding clause, further comprising: extracting payment information from one or more vehicles connected to the charging station; and transmitting payment using the payment information to all cars that joined the cluster.
20. The non-transitory machine-readable medium of any preceding clause, wherein the message comprises vehicle information, amount of electricity for discharging, payment information, health of the battery, amount of time available to discharge and wherein the request comprises a charging station identification, a charging station location, a payment offer information.

In various cases, any suitable combination or sub-combinations of clauses 17 to 20 can be implemented.

In various cases, any suitable combination or sub-combinations of clauses 1 to 20 can be implemented.

## Claims

1. A computer-implemented method, comprising:
receiving, by a system comprising a processor, a message from one or more vehicles, wherein the message comprising an indication to discharge energy;
adding, by the system, the one or more vehicles to form a cluster of vehicles that provided the indication to discharge energy; and
broadcasting, by the system, request to join the cluster of vehicles upon formation the cluster.

2. The computer-implemented method of claim 1, further comprising:
accumulating, by the system, electricity supplied by one or more vehicles connected to the charging station and storing the electricity into an intermediate battery.

3. The computer-implemented method of claim 2, further comprising:
receiving, by the system, an indication that the intermediate battery is full.

4. The computer-implemented method of claim 3, further comprising:
establishing, by the system, communication with grid in response to receiving an indication that the intermediate battery is full.

5. The computer-implemented method of claim 3, further comprising:
transmitting, by the system, electricity to grid in response to receiving an indication that the intermediate battery is full.

6. The computer-implemented method of claim 2, further comprising:
extracting, by the system, payment information from one or more vehicles connected to the charging station; and
transmitting, by the system, payment using the payment information to all cars that joined the cluster.

7. The computer-implemented method of claim 1, wherein the message comprises vehicle information, amount of electricity for discharging, payment information, health of the battery, amount of time available to discharge.

8. The computer-implemented method of claim 1, wherein the request comprises a charging station identification, a charging station location, a payment offer information.

9. A system, comprising:
a memory that stores computer executable components; and
a processor that executes the computer executable components stored in the memory, wherein the computer executable components comprise:
a communication component that receives a message from one or more vehicles, wherein the message comprising an indication to discharge energy;
a grid component that adds the one or more vehicles to form a cluster of vehicles that provided the indication to discharge electricity; and
the communication component that broadcasts a request to join the cluster of vehicles upon formation the cluster.

10. The system of claim 9, wherein the computer executable components further comprise:
a vehicle component that accumulates electricity supplied by one or more vehicles connected to the charging station and storing the electricity into an intermediate battery.

11. The system of claim 9, wherein the communication component receives an indication that the intermediate battery is full.

12. The system of claim 11, wherein the communication component establishes communication with grid in response to receiving an indication that the intermediate battery is full.

13. The system of claim 9, wherein the grid component transmits electricity to grid in response to receiving an indication that the intermediate battery is full.

14. The system of claim 9, wherein the computer executable components further comprise:
a vehicle component that extracts payment information from one or more vehicles connected to the charging station and transmits payment using the payment information to all cars that joined the cluster.

15. A non-transitory machine-readable medium, comprising executable instructions that, when executed by a processor, facilitate performance of operations, comprising:
receiving a message from one or more vehicles, wherein the message comprising an indication to discharge energy;
adding the one or more vehicles to form a cluster of vehicles that provided the indication to discharge energy; and
broadcasting request to join the cluster of vehicles upon formation the cluster.
